# EUROPEAN PATENT APPLICATION

(11) **EP 4 478 800 A1**
(43) Date of publication of application: **18.12.2024**
(21) Application number: 23752800.5
(22) Date of filing: 03.02.2023
(51) Int. Cl.: H04W 64/00, H04W 24/10, H04W 52/02, H04W 68/00

(54) **COMMUNICATION SYSTEM**

(30) Priority: 09.02.2022 JP 2022018775
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); IWAYAMA, Naofumi, Tokyo 100-8310 (JP)
(74) Representative: Mewburn Ellis LLP
(86) International application number: PCT/JP2023/003645
(87) International publication number: WO 2023/153335

(57) **Abstract**

A communication system which realizes avoidance of complexity in the positioning of a communication terminal and to which a fifth-generation wireless access system is applied includes: a network-side device equipped with a location management function of the fifth-generation wireless access system; and a base station. When a positioning request for a communication terminal connected to the base station occurs, the base station to which a positioning target terminal that is a communication terminal to be subjected to positioning is connected notifies the network-side device of information related to a timing at which the positioning target terminal is able to receive a positioning signal, and the network-side device determines setting contents related to a transmission/reception timing of a positioning signal based on the information provided from the base station, and notifies the base station that transmits the positioning signal and the positioning target terminal of the setting contents determined.

## Description

### Field

The present disclosure relates to wireless communication technology.

### Background

In the 3rd Generation Partnership Project (3GPP), which is an association for standardizing mobile communication systems, fifth-generation (hereinafter may be referred to as "5G") wireless access systems have been developed as a successor to Long Term Evolution (LTE) and Long Term Evolution Advanced (LTE-A) (see Non Patent Literature 1), which is one of fourth-generation wireless access systems (for example, Non Patent Literature 2). Technology for 5G wireless sections is referred to as "New Radio Access Technology" ("New Radio" is abbreviated as "NR"). NR systems have been developed based on the LTE systems and the LTE-A systems.

For example, in Europe, requirements for 5G have been compiled by an association called METIS (see Non Patent Literature 3). The requirements for 5G wireless access systems include 1000 times larger system capacity, 100 times higher data transmission rate, 1/5 lower data processing latency, and 100 times more communication terminals simultaneously connected than LTE systems, so as to achieve further reduction in power consumption and reduction in device cost (see Non Patent Literature 3).

In order to satisfy these requirements, 3GPP has devised 5G standards (see Non Patent Literatures 4 to 23).

As NR access schemes, Orthogonal Frequency Division Multiplexing (OFDM) is used for downlink, and OFDM and Discrete Fourier Transform-spread-OFDM (DFT-s-OFDM) is used for uplink. In addition, similarly to LTE and LTE-A, 5G systems do not include circuit switching and include only a packet communication scheme.

NR allows for the use of higher frequencies than LTE to improve transmission speed and reduce processing delay.

NR, in which higher frequencies than LTE may be used, ensures cell coverage by forming a narrow beam-shaped transmission/reception range (beamforming) and changing the beam direction (beamsweeping).

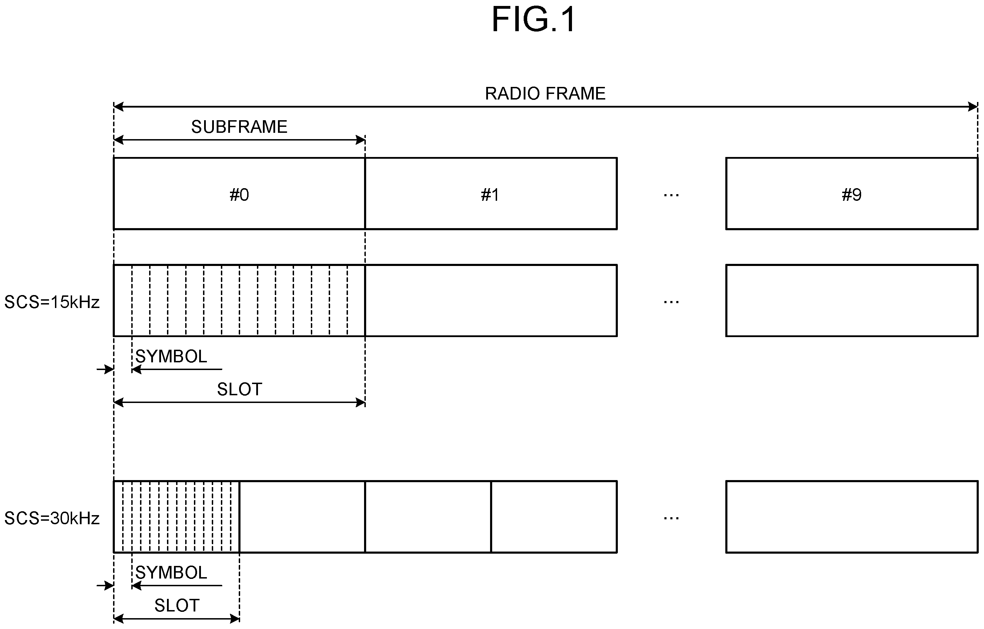

The 3GPP agreements regarding frame configurations for NR systems described in Non Patent Literature 1 (Chapter 5) will be described with reference to FIG. 1. FIG. 1 is an explanatory diagram illustrating a configuration of a radio frame for use in an NR-based communication system. In FIG. 1, one radio frame is 10 ms long. A radio frame is divided into 10 equally sized subframes. In the frame configuration of NR, one or more numerologies, that is, one or more subcarrier spacings (SCS), are supported. Regardless of subcarrier spacing in NR, one subframe is 1 ms long, and one slot is composed of 14 symbols. In addition, the number of slots included in one subframe is one in a subcarrier spacing of 15 kHz, and the number of slots in another subcarrier spacing increases in proportion to subcarrier spacing (see Non Patent Literature 11 (3GPP TS38.211)).

The 3GPP agreements regarding channel configurations for NR systems are described in Non Patent Literature 2 (Chapter 5) and Non Patent Literature 11.

Physical Broadcast Channel (PBCH) is a channel for downlink transmission from base station devices (hereinafter may be simply referred to as "base stations") to communication terminal devices (hereinafter may be simply referred to as "communication terminals") such as mobile terminal devices (hereinafter may be referred to as "mobile terminals" or "terminals"). The PBCH is transmitted together with a downlink synchronization signal.

The downlink synchronization signals in NR are classified as primary synchronization signals (P-SS) and secondary synchronization signals (S-SS). Synchronization signals are transmitted as a synchronization signal burst (hereinafter may be referred to as an SS burst) from the base station at predetermined intervals for a predetermined duration. The SS burst includes a synchronization signal block (hereinafter may be referred to as an SS block) for each beam of the base station.

The base station transmits the SS block of each beam in different beams within the duration of the SS burst. The SS block includes P-SS, S-SS, and PBCH.

Physical Downlink Control Channel (PDCCH) is a channel for downlink transmission from base stations to communication terminals. The PDCCH carries downlink control information (DCI). The DCI includes, for example, resource allocation information of Downlink Shared Channel (DL-SCH), which is one of the transport channels to be described later, resource allocation information of Paging Channel (PCH), which is one of the transport channels to be described later, and hybrid automatic repeat request (HARQ) information related to the DL-SCH. In addition, the DCI may include an uplink scheduling grant. The DCI may include acknowledgement (Ack)/negative acknowledgement (Nack) as a response signal to uplink transmission. In addition, in order to flexibly switch between DL and UL in a slot, the DCI may include a slot configuration indication (SFI). The PDCCH or DCI is also called a L1/L2 control signal.

In NR, a time and frequency domain that is a candidate including the PDCCH is provided. This domain is referred to as a control resource set (CORESET). The communications terminal monitors the CORESET, and acquires the PDCCH.

Physical Downlink Shared Channel (PDSCH) is a channel for downlink transmission from base stations to communication terminals. Downlink shared channel (DL-SCH) and PCH, which are transport channels, are mapped to the PDSCH.

Physical Uplink Control Channel (PUCCH) is a channel for uplink transmission from communication terminals to base stations. The PUCCH carries uplink control information (UCI). The UCI includes Ack/Nack which is a response signal to the downlink transmission, channel state information (CSI), scheduling request (SR), and the like. The CSI includes rank indicator (RI), precoding matrix indicator (PMI), and channel quality indicator (CQI) report. The RI is rank information of a channel matrix in multiple input multiple output (MIMO). The PMI is information of a precoding weight matrix for use in MIMO. The CQI is quality information indicating the quality of received data or channel quality. The UCI may be carried by the PUSCH described below. The PUCCH or UCI is also called a L1/L2 control signal.

Physical Uplink Shared Channel (PUSCH) is a channel for uplink transmission from communication terminals to base stations. To the PUSCH, Uplink Shared Channel (UL-SCH) is mapped as one of the transport channels.

Physical Random Access Channel (PRACH) is a channel for uplink transmission from communication terminals to base stations. The PRACH carries a random access preamble.

Downlink reference signals (RS) are known as symbols for NR-based communication systems. The following four types of downlink reference signals are defined: Data demodulation reference signals (DM-RS) which are UE-specific reference signals, phase tracking reference signals (PT-RS), positioning reference signals (PRS), and channel state information reference signals (CSI-RS). The measurement of the physical layer of the communication terminal includes reference signal received power (RSRP) measurement and reference signal received quality (RSRQ) measurement.

Similarly, uplink reference signals are known as symbols for NR-based communication systems. The following three types of uplink reference signals are defined: Demodulation reference signals (DM-RS), phase tracking reference signals (PT-RS), and sounding reference signals (SRS) .

The transport channels described in Non Patent Literature 2 (Chapter 5) will be described. Among the downlink transport channels, Broadcast Channel (BCH) is broadcast to the entire coverage of the base station (cell). The BCH is mapped to Physical Broadcast Channel (PBCH).

Retransmission control by HARQ is applied to Downlink Shared Channel (DL-SCH). The DL-SCH can be broadcast to the entire coverage of the base station (cell). The DL-SCH supports dynamic or semi-static resource allocation. Semi-static resource allocation is also called semi-persistent scheduling. The DL-SCH supports discontinuous reception (DRX) at communication terminals in order to reduce the power consumption of the communication terminals. The DL-SCH is mapped to the physical downlink shared channel (PDSCH).

Paging Channel (PCH) supports DRX at communication terminals so that the power consumption of the communication terminals can be reduced. The PCH is required to be broadcast to the entire coverage of the base station (cell). The PCH is mapped to physical resources such as the physical downlink shared channel (PDSCH) dynamically available for traffic.

Retransmission control by HARQ is applied to Uplink Shared Channel (UL-SCH) among the uplink transport channels. The UL-SCH supports dynamic or semi-static resource allocation. Semi-static resource allocation is also called configured grant. The UL-SCH is mapped to Physical Uplink Shared Channel (PUSCH).

Random Access Channel (RACH) is limited to control information. The RACH has a risk of collision. The RACH is mapped to Physical Random Access Channel (PRACH) .

HARQ will be described. HARQ is a technology for improving the communication quality of transmission paths by combining automatic repeat request (ARQ) and forward error correction. HARQ is advantageous for transmission paths with changing communication quality because error correction effectively functions through retransmission. In particular, further improvement in quality can be obtained through retransmission by combining the reception result of the first transmission and the reception result of the retransmission.

An example of a retransmission method will be described. If the reception side cannot correctly decode the received data, in other words, if a cyclic redundancy check (CRC) error occurs (CRC=NG), then "Nack" is transmitted from the reception side to the transmission side. Upon receiving "Nack", the transmission side retransmits the data. If the reception side can correctly decode the received data, in other words, if no CRC error occurs (CRC=OK), then "Ack" is transmitted from the reception side to the transmission side. Upon receiving "Ack", the transmission side transmits the next data.

Another example of a retransmission method will be described. In a case where a CRC error occurs on the reception side, a retransmission request is made from the reception side to the transmission side. The retransmission request is made by toggling of a new data indicator (NDI). Upon receiving the retransmission request, the transmission side retransmits the data. In a case where a CRC error does not occur on the reception side, the retransmission request is not made. In a case where the transmission side does not receive the retransmission request for a predetermined period of time, it is considered that a CRC error has not occurred on the reception side.

The logical channels described in Non Patent Literature 1 (Chapter 6) will be described. Broadcast Control Channel (BCCH) is a downlink channel for broadcasting system control information. The BCCH, which is a logical channel, is mapped to a transport channel: broadcast channel (BCH) or downlink shared channel (DL-SCH) .

Paging Control Channel (PCCH) is a downlink channel for transmitting a change in paging information and system information. The PCCH, which is a logical channel, is mapped to Paging Channel (PCH), which is a transport channel.

Common Control Channel (CCCH) is a channel for transmitting control information between communication terminals and base stations. The CCCH is used when a communication terminal does not have an RRC connection with the network. In downlink, the CCCH is mapped to the downlink shared channel (DL-SCH), which is a transport channel. In the uplink direction, the CCCH is mapped to the uplink shared channel (UL-SCH), which is a transport channel.

Dedicated Control Channel (DCCH) is a channel for transmitting dedicated control information between communication terminals and the network on a one-to-one basis. The DCCH is used when a communication terminal has an RRC connection with the network. The DCCH is mapped to the uplink shared channel (UL-SCH) in uplink, and is mapped to the downlink shared channel (DL-SCH) in downlink.

Dedicated Traffic Channel (DTCH) is a channel for one-to-one communication with communication terminals for transmitting user information. The DTCH exists in both uplink and downlink. The DTCH is mapped to the uplink shared channel (UL-SCH) in uplink, and is mapped to the downlink shared channel (DL-SCH) in downlink.

The position tracking of a communication terminal is performed in units of segments each consisting of one or more cells. The position tracking is performed to track the position of the communication terminal even in the idle state and call the communication terminal, in other words, enable the communication terminal to receive a call. Segments for the position tracking of the communication terminal are referred to as tracking areas.

NR supports calling of a communication terminal in a range the unit of which is an area smaller than the tracking area. This range is referred to as a RAN notification area (RNA). Paging of the communication terminal in the RRC_INACTIVE state, which will be described later, is performed in this range.

NR employs Carrier Aggregation (CA), in which two or more Component Carriers (CCs) are aggregated in order to support wider transmission bandwidths up to 100 MHz. CA is described in Non Patent Literature 1.

When CA is configured, a communication terminal, or a UE, has only one RRC connection with a network (NW). In the RRC connection, one serving cell provides NAS mobility information and security input. This cell is referred to as a Primary Cell (PCell). Depending on UE capabilities, a Secondary Cell (SCell) can be configured to form a set of serving cells together with the PCell. A set of serving cells consisting of one PCell and one or more SCells is configured for one UE.

3GPP has Dual Connectivity (abbreviated as DC), in which a UE is connected to and communicates with two base stations in order to further increase the communication capacity. DC is described in Non Patent Literatures 1 and 22.

One of the base stations that perform dual connectivity (DC) may be referred to as a "master base station (MN)", and the other may be referred to as a "secondary base station (SN)". The serving cells configured by the master base station may be collectively referred to as a master cell group (MCG), and the serving cells configured by the secondary base station may be collectively referred to as a secondary cell group (SCG). In the DC, a primary cell in the MCG or the SCG is referred to as a special cell (SpCell or SPCell). A special cell in the MCG is referred to as a PCell, and a special cell in the SCG is referred to as a primary SCG cell (PSCell).

In addition, NR reduces the power consumption of a UE by allowing a base station to set a part of the carrier frequency band (hereinafter may be referred to as a bandwidth part (BWP)) in advance for the UE so that the UE can perform transmission and reception with the base station using the BWP.

In addition, 3GPP has developed a framework for supporting services (or applications) using sidelink (SL) communication (also referred to as PC5 communication) in both the Evolved Packet System (EPS) to be described later and the 5G core system (see Non Patent Literatures 1, 2, and 26 to 28). In SL communication, communication is performed between terminals. Examples of services using SL communication include vehicle-to-everything (V2X) services and proximity-based services. In SL communication, not only direct communication between terminals but also communication between UE and NW via a relay has been proposed (See Non Patent Literatures 26 and 28).

Physical channels for use in SL (see Non Patent Literatures 2 and 11) will be described. Physical Sidelink Broadcast Channel (PSBCH) carries information related to the system and synchronization and is transmitted from UE.

Physical Sidelink Control Channel (PSCCH) carries control information from UE for sidelink communication and V2X sidelink communication.

Physical Sidelink Shared Channel (PSSCH) carries data from UE for sidelink communication and V2X sidelink communication.

Physical Sidelink Feedback Channel (PSFCH) carries HARQ feedback on the sidelink from the UE that has received the PSSCH transmission to the UE that has transmitted the PSSCH.

Transport channels for use in SL (see Non Patent Literature 1) will be described. Sidelink Broadcast Channel (SL-BCH) has a predetermined transport format and is mapped to the physical channel PSBCH.

Sidelink Shared Channel (SL-SCH) supports broadcast transmission. The SL-SCH supports both UE autonomous resource selection and resource allocation scheduled by the base station. There is a collision risk in the UE autonomous resource selection, and there is no collision when the UE is allocated individual resources by the base station. The SL-SCH also supports dynamic link adaptation by changing transmission power, modulation, and coding. The SL-SCH is mapped to the physical channel PSSCH.

Logical channels for use in SL (see Non Patent Literature 2) will be described. Sidelink Broadcast Control Channel (SBCCH) is a sidelink channel for broadcasting sidelink system information from one UE to other UEs. The SBCCH is mapped to the transport channel SL-BCH.

Sidelink Traffic Channel (STCH) is a one-to-many sidelink traffic channel for transmitting user information from one UE to other UEs. The STCH is used only by UEs having sidelink communication capability and UEs having V2X sidelink communication capability. One-to-one communication between two UEs having sidelink communication capability is also implemented by the STCH. The STCH is mapped to the transport channel SL-SCH.

Sidelink Control Channel (SCCH) is a control channel for sidelink for transmitting control information from one UE to other UEs. The SCCH is mapped to the transport channel SL-SCH.

In LTE, SL communication is applied only to broadcast. In NR, SL communication is designed to support unicast and groupcast in addition to broadcast (see Non Patent Literature 27 (3GPP TS23.287)).

Unicast communication and groupcast communication in SL support HARQ feedback (Ack/Nack), CSI reporting, and the like.

In addition, 3GPP has developed Integrated Access and Backhaul (IAB), in which both an access link that is a link between UE and a base station and a backhaul link that is a link between base stations are wirelessly performed (see Non Patent Literatures 2, 20, and 29).

3GPP has also developed several new technologies. For example, application of positioning technology has been developed, among which low-power-consumption and high-accuracy positioning has been developed (see Non Patent Literature 37).

### Citation List

### Non Patent Literature

Non Patent Literature 1: 3GPP TS36.300 V16.7.0
Non Patent Literature 2: 3GPP TS38.300 V16.8.0
Non Patent Literature 3: "Scenarios, requirements and KPIs for 5G mobile and wireless system", ICT-317669-METIS/D1.1
Non Patent Literature 4: 3GPP TR23.799 V14.0.0
Non Patent Literature 5: 3GPP TR38.801 V14.0.0
Non Patent Literature 6: 3GPP TR38.802 V14.2.0
Non Patent Literature 7: 3GPP TR38.804 V14.0.0
Non Patent Literature 8: 3GPP TR38.912 V16.0.0
Non Patent Literature 9: 3GPP RP-172115
Non Patent Literature 10: 3GPP TS23.501 V17.3.0
Non Patent Literature 11: 3GPP TS38.211 V17.0.0
Non Patent Literature 12: 3GPP TS38.212 V17.0.0
Non Patent Literature 13: 3GPP TS38.213 V17.0.0
Non Patent Literature 14: 3GPP TS38.214 V17.0.0
Non Patent Literature 15: 3GPP TS38.321 V16.7.0
Non Patent Literature 16: 3GPP TS38.322 V16.2.0
Non Patent Literature 17: 3GPP TS38.323 V16.6.0
Non Patent Literature 18: 3GPP TS37.324 V16.3.0
Non Patent Literature 19: 3GPP TS38.331 V16.7.0
Non Patent Literature 20: 3GPP TS38.401 V16.8.0
Non Patent Literature 21: 3GPP TS38.413 V16.8.0
Non Patent Literature 22: 3GPP TS37.340 V16.8.0
Non Patent Literature 23: 3GPP TS38.423 V16.8.0
Non Patent Literature 24: 3GPP TS38.305 V16.7.0
Non Patent Literature 25: 3GPP TS23.273 V17.3.0
Non Patent Literature 26: 3GPP TR23.703 V12.0.0
Non Patent Literature 27: 3GPP TS23.287 V17.2.0
Non Patent Literature 28: 3GPP TS23.303 V17.0.0
Non Patent Literature 29: 3GPP TS38.340 V16.5.0
Non Patent Literature 30: 3GPP TS38.455 V16.6.0
Non Patent Literature 31: 3GPP TS37.355 V16.7.0
Non Patent Literature 32: 3GPP TR38.875 V17.0.0
Non Patent Literature 33: 3GPP RP-210655
Non Patent Literature 34: 3GPP RP-210982
Non Patent Literature 35: 3GPP RP-211742
Non Patent Literature 36: 3GPP RP-212802
Non Patent Literature 37: 3GPP RP-213588
Non Patent Literature 38: 3GPP TS38.304 V16.7.0
Non Patent Literature 39: 3GPP TS24.501 V17.5.0
Non Patent Literature 40: 3GPP TR38.857 V17.0.0
Non Patent Literature 41: 3GPP R2-2111374
Non Patent Literature 42: 3GPP TS37.320 V16.7.0

### Summary of Invention

### Problem to be solved by the Invention

In 5G-based UE positioning, the UE to be subjected to positioning may be in the RRC_INACTIVE state. Location management function (LMF) (see Non Patent Literature 24 (3GPP TS 38.305)) constituting the 5G-based communication system may configure the positioning signal setting so as to transmit the positioning signal at the paging timing of the UE. However, the paging timing is determined by using the identifier of the UE and the parameter that is broadcast as system information. Therefore, a change in the paging timing affects the paging timing of other UEs, leading to a problem that the communication system is complicated.

In view of the above problems, an object of the present disclosure is to realize avoidance of complexity in the positioning of a communication terminal in a communication system.

### Means to Solve the Problem

A communication system according to the present disclosure is a communication system to which a fifth-generation wireless access system is applied, the communication system comprising: a network-side device equipped with a location management function of the fifth-generation wireless access system; and a base station, wherein in a case where a positioning request for a communication terminal connected to the base station occurs, the base station to which a positioning target terminal that is a communication terminal to be subjected to positioning is connected notifies the network-side device of information related to a timing at which the positioning target terminal is able to receive a positioning signal, and the network-side device determines setting contents related to a transmission/reception timing of a positioning signal based on the information provided from the base station, and notifies the base station that transmits the positioning signal and the positioning target terminal of the setting contents determined.

### Effects of the Invention

A communication system according to the present disclosure can achieve the effect of realizing avoidance of complexity in the positioning of a communication terminal.

Objects, features, aspects, and advantages of the present disclosure will become more apparent from the following detailed description and the accompanying drawings.

### Brief Description of Drawings

FIG. 1 is an explanatory diagram illustrating a configuration of a radio frame for use in an NR-based communication system.
FIG. 2 is a block diagram illustrating an overall configuration of an NR-based communication system 210 discussed in 3GPP.
FIG. 3 is a diagram illustrating a DC configuration with a base station connected to an NG core.
FIG. 4 is a block diagram illustrating a configuration of the mobile terminal 202 illustrated in FIG. 2.
FIG. 5 is a block diagram illustrating a configuration of the base station 213 illustrated in FIG. 2.
FIG. 6 is a block diagram illustrating a configuration of a 5GC unit.
FIG. 7 is a flowchart schematically illustrating the procedure from a cell search to an idle operation performed by a communication terminal (UE) in an NR-based communication system.
FIG. 8 is a diagram illustrating an exemplary configuration of a cell in the NR system.
FIG. 9 is a connection configuration diagram illustrating an exemplary connection configuration of terminals in the SL communication.
FIG. 10 is a connection configuration diagram illustrating an exemplary connection configuration of a base station supporting Integrated Access and Backhaul.
FIG. 11 is a sequence diagram illustrating an example of a first half of a positioning sequence related to the UE in RRC_INACTIVE according to the first embodiment.
FIG. 12 is a sequence diagram illustrating an example of a second half of a positioning sequence related to the UE in RRC_INACTIVE according to the first embodiment.
FIG. 13 is a sequence diagram illustrating a first other example of a positioning sequence related to the UE in RRC_INACTIVE according to the first embodiment.
FIG. 14 is a sequence diagram illustrating a second other example of a positioning sequence related to the UE in RRC_INACTIVE according to the first embodiment.
FIG. 15 is a sequence diagram illustrating an example of a positioning sequence in which the UE notifies the AMF of the positioning capability of the UE in advance according to the first modification of the first embodiment.
FIG. 16 is a sequence diagram illustrating an example of a positioning sequence in which the AMF notifies the LMF of information related to the base station that covers the UE according to the second embodiment.
FIG. 17 is a sequence diagram illustrating an example of a positioning procedure involving the cell reselection of the UE according to the second embodiment.
FIG. 18 is a sequence diagram illustrating an example of a positioning procedure in the reduced capability UE according to the third embodiment.
FIG. 19 is a sequence diagram illustrating another example of a positioning procedure in the reduced capability UE according to the third embodiment.
FIG. 20 is a diagram illustrating an example in which the code sequence of the positioning signal is reallocated within a band in which the reduced capability UE can perform transmission and reception according to the third embodiment.
FIG. 21 is a diagram illustrating an example in which the code sequence of the positioning signal is not reallocated within a band in which the reduced capability UE can perform transmission and reception according to the third embodiment.

### Description of Embodiments

### First Embodiment.

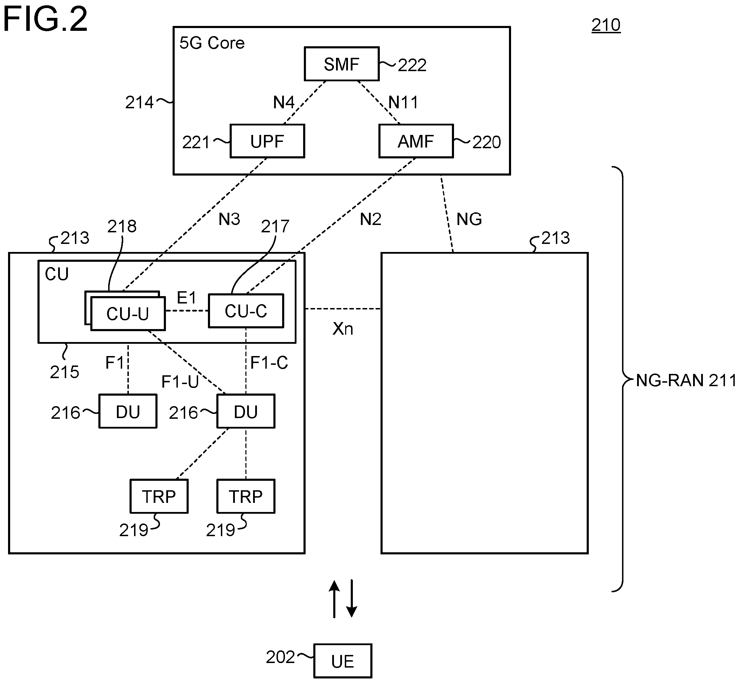

FIG. 2 is a block diagram illustrating an overall configuration of an NR-based communication system 210 discussed in 3GPP. Below is a description of FIG. 2. The wireless access network is referred to as a Next Generation Radio Access Network (NG-R_AN) 211. A mobile terminal device (hereinafter referred to as a "mobile terminal or user equipment (UE)") 202 which is a communication terminal device can wirelessly communicate with a base station device (hereinafter referred to as an "NR base station (NG-RAN NodeB (gNB)") 213, and transmits and receives signals by wireless communication. The NG-RAN 211 includes one or more NR base stations 213.

Here, "communication terminal devices" include not only mobile terminal devices such as mobile phone terminal devices that can move but also non-moving devices such as sensors. In the following description, a "communication terminal device" may be simply referred to as a "communication terminal".

Access Stratum (AS) protocol is terminated between the UE 202 and the NG-RAN 211. As the AS control protocol, for example, Radio Resource Control (RRC), Service Data Adaptation Protocol (SDAP), Packet Data Convergence Protocol (PDCP), Radio Link Control (RLC), Medium Access Control (MAC), or Physical layer (PHY) is used. RRC is used in control plane (hereinafter may be referred to as C-plane), SDAP is used in user plane (hereinafter may be referred to as U-plane) and PDCP, MAC, RLC, and PHY are used in both C-plane and U-plane.

The control protocol "Radio Resource Control (RRC)" between the UE 202 and the NR base station 213 performs broadcast, paging, RRC connection management, and the like. The states of the NR base station 213 and the UE 202 in RRC are classified as RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has an RRC connection and can transmit and receive data to and from the network. In RRC_CONNECTED, handover (HO), measurement of a neighbor cell, and the like are performed. In RRC_INACTIVE, the connection between a 5G core unit 214 and the NR base station 213 is maintained, and meanwhile system information (SI) broadcast, paging, cell re-selection, mobility, and the like are performed.

The gNB 213 is connected via an NG interface to the 5G core unit (hereinafter may be referred to as the "5GC unit") 214 including an Access and Mobility Management Function (AMF), a Session Management Function (SMF), a User Plane Function (UPF), or the like. Control information and/or user data is communicated between the gNB 213 and the 5GC unit 214. The NG interface is a generic term for the N2 interface between the gNB 213 and the AMF 220, the N3 interface between the gNB 213 and the UPF 221, the N11 interface between the AMF 220 and the SMF 222, and the N4 interface between the UPF 221 and the SMF 222. A plurality of 5GC units 214 may be connected to one gNB 213. Different gNBs 213 are connected by an Xn interface, and control information and/or user data is communicated between the gNBs 213.

The 5GC unit 214 is a higher-level device, specifically, a higher-level node, and performs control of connection between the NR base station 213 and the mobile terminal (UE) 202, distribution of a paging signal to one or more NR base stations (gNBs) 213 and/or LTE base stations (E-UTRAN NodeB: eNB), and the like. The 5GC unit 214 also performs mobility control in the idle state. The 5GC unit 214 manages a tracking area list when the mobile terminal 202 is in the idle state, inactive state, and active state. The 5GC unit 214 starts the paging protocol by transmitting a paging message to a cell belonging to a tracking area in which the mobile terminal 202 is registered.

The gNB 213 may configure one or more cells. In a case where one gNB 213 configures a plurality of cells, every single cell is configured to be able to communicate with the UE 202.

The gNB 213 may be divided into a central unit (hereinafter may be referred to as CU) 215 and a distributed unit (hereinafter may be referred to as DU) 216. One CU 215 is configured in the gNB 213. One or more DUs 216 are configured in the gNB 213. One DU 216 constitutes one or more cells. The CU 215 is connected to the DU 216 by an F1 interface, and control information and/or user data is communicated between the CU 215 and the DU 216. The F1 interface includes an F1-C interface and an F1-U interface. The CU 215 is responsible for the functions of the RRC, SDAP, and PDCP protocols, and the DU 216 is responsible for the functions of the RLC, MAC, and PHY protocols. One or more transmission reception points (TRPs) 219 may be connected to the DU 216. The TRP 219 transmits and receives wireless signals to and from the UE.

The CU 215 may be divided into a CU for C-plane (CU-C) 217 and a CU for U-plane (CU-U) 218. One CU-C 217 is configured in the CU 215. One or more CU-Us 218 are configured in the CU 215. The CU-C 217 is connected to the CU-U 218 by an E1 interface, and control information is communicated between the CU-C 217 and the CU-U 218. The CU-C 217 is connected to the DU 216 via the F1-C interface, and control information is communicated between the CU-C 217 and the DU 216. The CU-U 218 is connected to the DU 216 by the F1-U interface, and user data is communicated between the CU-U 218 and the DU 216.

In the 5G-based communication system, the Unified Data Management (UDM) function and the Policy Control Function (PCF) described in Non Patent Literature 10 (3GPP TS23.501) may be included. The UDM and/or the PCF may be included in the 5GC unit 214 in FIG. 214.

In the 5G-based communication system, the Location Management Function (LMF) described in Non Patent Literature 24 (3GPP TS38.305) may be provided. The LMF may be connected to the base station via the AMF as disclosed in Non Patent Literature 25 (3GPP TS23.273).

In the 5G-based communication system, the Non-3GPP Interworking Function (N3IWF) described in Non Patent Literature 10 (3GPP TS23.501) may be included. The N3IWF may terminate the Access Network (AN) with the UE in non-3GPP access with the UE.

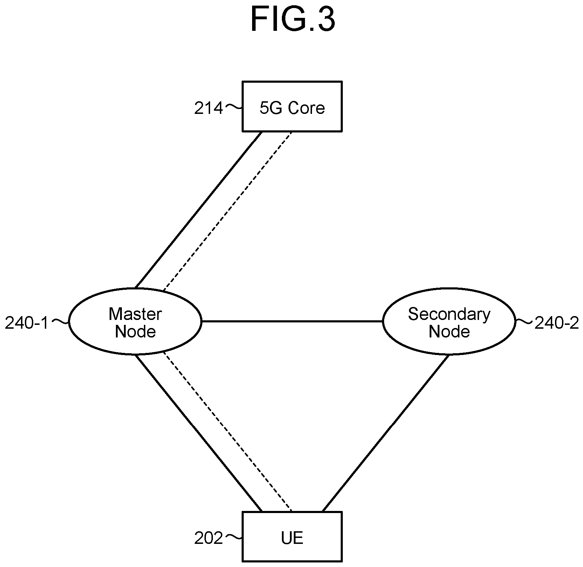

FIG. 3 is a diagram illustrating a dual connectivity (DC) configuration for connection to an NG core. In FIG. 3, a solid line indicates a U-Plane connection, and a broken line indicates a C-Plane connection. In FIG. 3, a master base station 240-1 may be a gNB or an eNB. In addition, a secondary base station 240-2 may be a gNB or an eNB. For example, in FIG. 3, a DC configuration in which the master base station 240-1 is a gNB and the secondary base station 240-2 is an eNB may be referred to as NG-EN-DC. Although FIG. 3 illustrates an example in which the U-Plane connection between the 5GC unit 214 and the secondary base station 240-2 is established via the master base station 240-1, the U-Plane connection may be directly established between the 5GC unit 214 and the secondary base station 240-2. Further, in FIG. 3, instead of the 5GC unit 214, an evolved packet core (EPC) which is a core network connected to the LTE system or the LTE-A system may be connected to the master base station 240-1. The U-Plane connection between the EPC and the secondary base station 240-2 may be directly established.

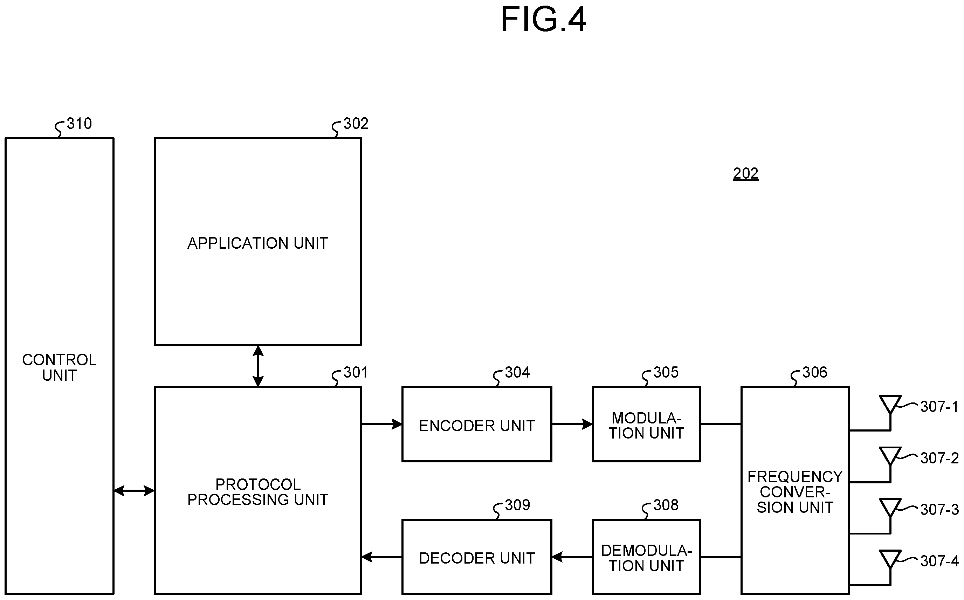

FIG. 4 is a block diagram illustrating a configuration of the mobile terminal 202 illustrated in FIG. 2. A transmission process in the mobile terminal 202 illustrated in FIG. 4 will be described. First, control data from a control unit 310 and user data from an application unit 302 are sent to a protocol processing unit 301. Control data and user data may be buffered. A buffer for control data and user data may be provided in the control unit 310, in the application unit 302, or in the protocol processing unit 301. The protocol processing unit 301 performs protocol processing such as SDAP, PDCP, RLC, and MAC, for example, determining a transmission destination base station in DC or the like, adding a header in each protocol, and the like. The data that has undergone the protocol processing is passed to an encoder unit 304 and subjected to encoding such as error correction. Some data may be directly output from the protocol processing unit 301 to a modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to a frequency conversion unit 306 to be converted into a wireless transmission frequency. Thereafter, the transmission signals are transmitted from antennas 307-1 to 307-4 to the base station 213. FIG. 4 illustrates the case where the number of antennas is four, but the number of antennas is not limited to four.

A reception process in the mobile terminal 202 is executed as follows. Wireless signals from the base station 213 are received by the antennas 307-1 to 307-4. The reception signal is converted from the wireless reception frequency into a baseband signal in the frequency conversion unit 306, and demodulation is performed in a demodulation unit 308. The demodulation unit 308 may perform weight calculation and multiplication. The demodulated data is passed to a decoder unit 309, and decoding such as error correction is performed. The decoded data is passed to the protocol processing unit 301, and protocol processing such as MAC, RLC, PDCP, and SDAP, for example, an operation such as removal of a header in each protocol, is performed. Among the data that has undergone the protocol processing, the control data is passed to the control unit 310, and the user data is passed to the application unit 302.

A series of processes of the mobile terminal 202 is controlled by the control unit 310. Therefore, the control unit 310 is also connected to the respective units 302 and 304 to 309, which is not illustrated in FIG. 4.

Each unit of the mobile terminal 202, for example, the control unit 310, the protocol processing unit 301, the encoder unit 304, and the decoder unit 309, is implemented by, for example, processing circuitry including a processor and a memory. For example, the control unit 310 is implemented by the processor executing a program in which a series of processes of the mobile terminal 202 is described. The program in which a series of processes of the mobile terminal 202 is described is stored in the memory. The memory is exemplified by a nonvolatile or volatile semiconductor memory such as a random access memory (RAM), a read only memory (ROM), or a flash memory. Each unit of the mobile terminal 202, for example, the control unit 310, the protocol processing unit 301, the encoder unit 304, and the decoder unit 309, may be implemented by dedicated processing circuitry such as a field programmable gate array (FPGA), an application specific integrated circuit (ASIC), or a digital signal processor (DSP). In FIG. 4, the number of antennas used for transmission and the number of antennas used for reception by the mobile terminal 202 may be the same or different.

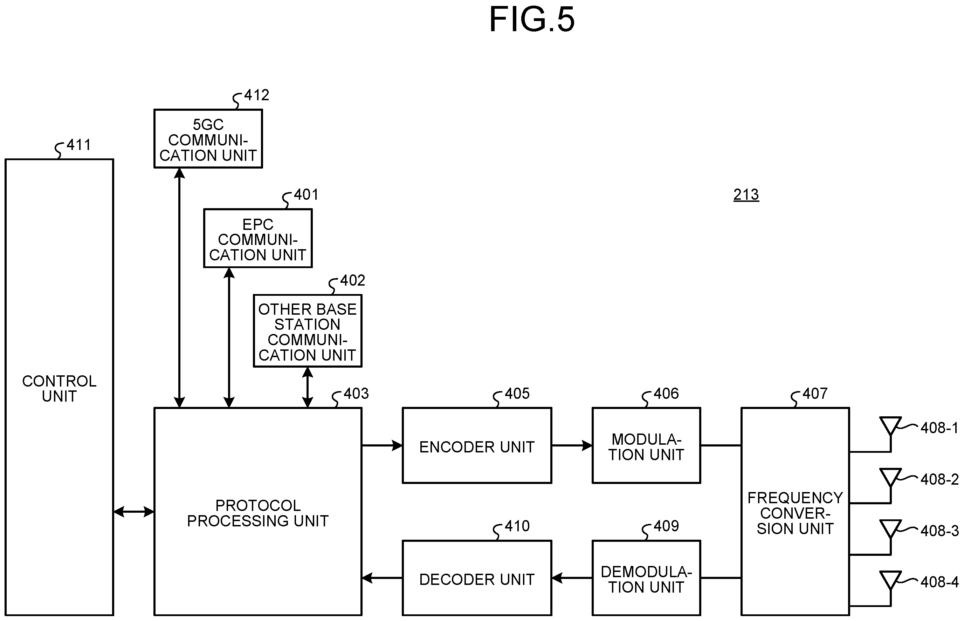

FIG. 5 is a block diagram illustrating a configuration of the base station 213 illustrated in FIG. 2. A transmission process in the base station 213 illustrated in FIG. 5 will be described. An EPC communication unit 401 transmits and receives data between the base station 213 and the EPC. A 5GC communication unit 412 transmits and receives data between the base station 213 and the 5GC (such as the 5GC unit 214). An other base station communication unit 402 transmits and receives data to and from other base stations. The EPC communication unit 401, the 5GC communication unit 412, and the other base station communication unit 402 each exchange information with a protocol processing unit 403. Control data from a control unit 411 and user data and control data from the EPC communication unit 401, the 5GC communication unit 412, and the other base station communication unit 402 are sent to the protocol processing unit 403. Control data and user data may be buffered. A buffer for control data and user data may be provided in the control unit 411, in the EPC communication unit 401, in the 5GC communication unit 412, or in the other base station communication unit 402.

The protocol processing unit 403 performs protocol processing such as SDAP, PDCP, RLC, and MAC, for example, routing transmission data in DC or the like, adding a header in each protocol, and the like. The data that has undergone the protocol processing is passed to an encoder unit 405 and subjected to encoding such as error correction. Some data may be directly output from the protocol processing unit 403 to a modulation unit 406 without being subjected to encoding. In addition, data may be sent from the protocol processing unit 403 to the other base station communication unit 402. For example, in the DC, data sent from the 5GC communication unit 412 or the EPC communication unit 401 may be sent to another base station, for example, a secondary base station, via the other base station communication unit 402. The encoded data is subjected to modulation in the modulation unit 406. The modulation unit 406 may perform precoding for MIMO. The modulated data is converted into a baseband signal and then output to a frequency conversion unit 407 to be converted into a wireless transmission frequency. Thereafter, the transmission signals are transmitted from antennas 408-1 to 408-4 to one or more mobile terminals 202. FIG. 5 illustrates the case where the number of antennas is four, but the number of antennas is not limited to four.

A reception process in the base station 213 is executed as follows. Wireless signals from one or more mobile terminals 202 are received by the antennas 408-1 to 408-4. The reception signal is converted from the wireless reception frequency into a baseband signal in the frequency conversion unit 407, and demodulation is performed in a demodulation unit 409. The demodulated data is passed to a decoder unit 410, and decoding such as error correction is performed. The decoded data is passed to the protocol processing unit 403, and protocol processing such as MAC, RLC, PDCP, and SDAP, for example, an operation such as removal of a header in each protocol, is performed. Among the data that has undergone the protocol processing, the control data is passed to the control unit 411, the 5GC communication unit 412, the EPC communication unit 401, or the other base station communication unit 402, and the user data is passed to the 5GC communication unit 412, the EPC communication unit 401, or the other base station communication unit 402. Data sent from the other base station communication unit 402 may be sent to the 5GC communication unit 412 or the EPC communication unit 401. The data may be, for example, uplink data that is sent to the 5GC communication unit 412 or the EPC communication unit 401 via another base station in the DC.

A series of processes of the base station 213 is controlled by the control unit 411. Therefore, the control unit 411 is also connected to the respective units 401, 402, 405 to 410, and 412, which is not illustrated in FIG. 5.

Each unit of the base station 213, for example, the control unit 411, the protocol processing unit 403, the 5GC communication unit 412, the EPC communication unit 401, the other base station communication unit 402, the encoder unit 405, and the decoder unit 410, is implemented by processing circuitry including a processor and a memory, or dedicated processing circuitry such as FPGA, ASIC, or DSP, similarly to the mobile terminal 202 described above. In FIG. 5, the number of antennas used for transmission and the number of antennas used for reception by the base station 213 may be the same or different.

As an example of the configuration of the CU 215 illustrated in FIG. 2, one including a DU communication unit may be used except for the encoder unit 405, the modulation unit 406, the frequency conversion unit 407, the antennas 408-1 to 408-4, the demodulation unit 409, and the decoder unit 410 illustrated in FIG. 5. The DU communication unit is connected to the protocol processing unit 403. The protocol processing unit 403 in the CU 215 performs protocol processing such as PDCP and SDAP.

As an example of the configuration of the DU 216 illustrated in FIG. 2, a configuration in which a CU communication unit is provided may be used except for the EPC communication unit 401, the other base station communication unit 402, and the 5GC communication unit 412 illustrated in FIG. 5. The CU communication unit is connected to the protocol processing unit 403. The protocol processing unit 403 in the DU 216 performs protocol processing such as PHY, MAC, and RLC.

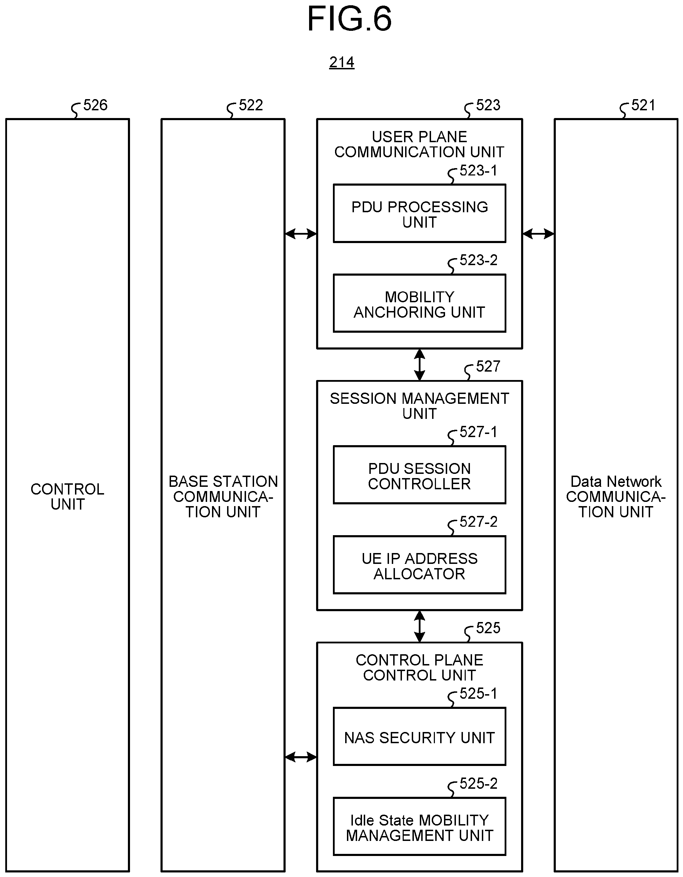

FIG. 6 is a block diagram illustrating a configuration of a 5GC unit. FIG. 6 depicts the configuration of the 5GC unit 214 illustrated in FIG. 2 described above. FIG. 6 depicts a case where an AMF configuration, an SMF configuration, and a UPF configuration are included in the 5GC unit 214 illustrated in FIG. 2. In the example illustrated in FIG. 6, the AMF may have the function of a control plane control unit 525, the SMF may have the function of a session management unit 527, and the UPF may have the functions of a user plane communication unit 523 and a Data Network communication unit 521. The Data Network communication unit 521 transmits and receives data between the 5GC unit 214 and the Data Network. A base station communication unit 522 transmits and receives data by means of the NG interface between the 5GC unit 214 and the base station 213. The user data sent from the Data Network is passed from the Data Network communication unit 521 to the base station communication unit 522 via the user plane communication unit 523, and transmitted to one or more base stations 213. The user data sent from the base station 213 is passed from the base station communication unit 522 to the Data Network communication unit 521 via the user plane communication unit 523, and transmitted to the Data Network.

The control data sent from the base station 213 is passed from the base station communication unit 522 to the control plane control unit 525. The control plane control unit 525 may pass the control data to the session management unit 527. Control data may be sent from the Data Network. The control data sent from the Data Network may be sent from the Data Network communication unit 521 to the session management unit 527 via the user plane communication unit 523. The session management unit 527 may send the control data to the control plane control unit 525.

The user plane control unit 523 includes a PDU processing unit 523-1, a mobility anchoring unit 523-2, and the like, and performs general processing on the user plane (hereinafter may be referred to as U-Plane.). The PDU processing unit 523-1 processes data packets, for example, transmits and receives packets to and from the Data Network communication unit 521 and transmits and receives packets to and from the base station communication unit 522. The mobility anchoring unit 523-2 is responsible for anchoring a data path at the time of mobility of the UE.

The session management unit 527 manages a PDU session provided between the UE and the UPF. The session management unit 527 includes a PDU session controller 527-1, a UE IP address allocator 527-2, and the like. The PDU session controller 527-1 manages a PDU session between the mobile terminal 202 and the 5GC unit 214. The UE IP address allocator 527-2 performs, for example, allocation of an IP address to the mobile terminal 202.

The control plane control unit 525 includes a NAS security unit 525-1, an Idle State mobility management unit 525-2, and the like, and performs general processing on the control plane (hereinafter may be referred to as C-Plane). The NAS security unit 525-1 ensures security of Non-Access Stratum (NAS) messages and the like. The Idle State mobility management unit 525-2 performs, for example: mobility management in the idle state (also referred to as RRC_IDLE state or simply as idle); generation and control of paging signals in the idle state; and addition, deletion, update, and search of tracking areas and management of tracking area lists for one or more mobile terminals 202 under control.

A series of processes of the 5GC unit 214 is controlled by a control unit 526. Therefore, the control unit 526 is connected to the respective units 521 to 523, 525, and 527, which is not illustrated in FIG. 6. Similarly to the control unit 310 of the mobile terminal 202 described above, each unit of the 5GC unit 214 is implemented by, for example, processing circuitry including a processor and a memory, or by dedicated processing circuitry such as FPGA, ASIC, or DSP.

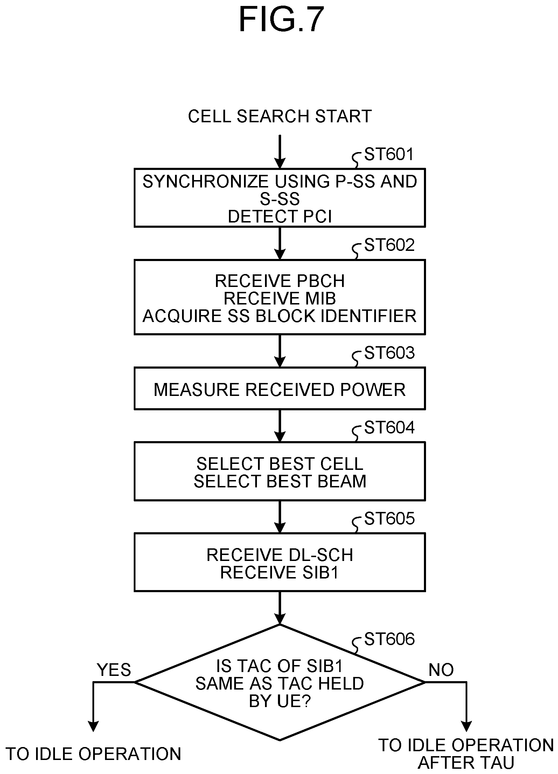

Next, an example of a cell search method in a communication system will be described. FIG. 7 is a flowchart schematically illustrating the procedure from a cell search to an idle operation performed by a communication terminal (UE) in an NR-based communication system. Starting the cell search, the communication terminal synchronizes the slot timing and the frame timing using the primary synchronization signal (P-SS) and the secondary synchronization signal (S-SS) transmitted from a nearby base station in step ST601.

The P-SS and the S-SS are collectively referred to as synchronization signals (SS). The synchronization signals (SS) are allocated synchronization codes corresponding one-to-one to physical cell identifiers (PCIs) allocated to cells. The number of PCIs available is 1008. The communication terminal performs synchronization using the 1008 PCIs and detects (identifies) the PCI of a synchronized cell.

The communication terminal receives the PBCH in step ST602 for the next synchronized cell. A Master Information Block (MIB) including cell configuration information is mapped to the BCCH on the PBCH. Therefore, the MIB is obtained by receiving the PBCH and obtaining the BCCH. Examples of the information of the MIB include system frame number (SFN), scheduling information of system information block (SIB) 1, subcarrier spacing of SIB 1 or the like, and information of DM-RS position.

Further, the communication terminal acquires an SS block identifier from the PBCH. A part of the bit string of the SS block identifier is included in the MIB. The remaining part of the bit string is included in an identifier that is used for sequence generation of the DM-RS accompanying the PBCH. The communication terminal acquires the SS block identifier by using the MIB included in the PBCH and the DM-RS sequence accompanying the PBCH.

Next, in step ST603, the communication terminal measures the received power of the SS block.

Next, in step ST604, the communication terminal selects, from among the one or more cells detected by step ST603, a cell having the best reception quality, e.g. a cell having the highest received power, or the best cell. In addition, the communication terminal selects a beam having the best reception quality, for example, a beam having the highest received power of the SS block, that is, the best beam. For the selection of the best beam, for example, the received power of the SS block for each SS block identifier is used.

Next, in step ST605, the communication terminal receives the DL-SCH based on the scheduling information of SIB1 included in the MIB, and obtains System Information Block (SIB) 1 in the broadcast information BCCH. The SIB1 includes information related to access to the cell, configuration information of the cell, and scheduling information of other SIBs (SIBk; k is an integer of ≥2). The SIB1 also includes a Tracking Area Code (TAC).

Next, in step ST606, the communication terminal compares the TAC of the SIB1 received in step ST605 with the TAC portion of the Tracking Area Identity (TAI) in the tracking area list already held by the communication terminal. The tracking area list is also referred to as the TAI list. The TAI is identification information for identifying the tracking area, and includes a Mobile Country Code (MCC), a Mobile Network Code (MNC), and a Tracking Area Code (TAC). The MCC is a country code. The MNC is a network code. The TAC is the code number of the tracking area.

If the result of the comparison in step ST606 shows that the TAC received in step ST605 is the same as the TAC included in the tracking area list, the communication terminal starts the idle operation in the cell. If the comparison shows that the TAC received in step ST605 is not included in the tracking area list, the communication terminal requests, through the cell, the core network (EPC) including the MME and the like to change the tracking area for performing Tracking Area Update (TAU).

A device constituting the core network (hereinafter may be referred to as a "core-network-side device") updates the tracking area list based on the identification number (such as UE-ID) of the communication terminal transmitted from the communication terminal together with the TAU request signal. The core-network-side device transmits the updated tracking area list to the communication terminal. The communication terminal rewrites (updates) the TAC list held by the communication terminal based on the received tracking area list. Thereafter, the communication terminal starts the idle operation in the cell.

Next, an example of a random access method in a communication system will be described. In the random access, four-step random access and two-step random access are used. In addition, for each of the four-step random access and the two-step random access, there are contention-based random access, that is, random access in which timing collision with another mobile terminal may occur and contention-free random access without collision.

An example of a contention-based four-step random access method will be described. As a first step, the mobile terminal transmits a random access preamble to the base station. The random access preamble may be selected by the mobile terminal from a predetermined range, or may be individually assigned to mobile terminals and provided as notification from the base station.

As a second step, the base station transmits a random access response to the mobile terminal. The random access response includes the uplink scheduling information that is used in a third step, the terminal identifier that is used in the uplink transmission in the third step, and the like.

As the third step, the mobile terminal performs uplink transmission to the base station. The mobile terminal uses the information acquired in the second step for uplink transmission. As a fourth step, the base station notifies the mobile terminal of the presence or absence of contention resolution. The mobile terminal that has been notified that there is no contention ends the random access processing. The mobile terminal that has been notified that there is a contention performs the processing again from the first step.

The contention-free four-step random access method is different from the contention-based four-step random access method in the following points. That is, prior to the first step, the base station pre-allocates a random access preamble and uplink scheduling to the mobile terminal. In addition, the notification of the presence or absence of contention resolution in the fourth step is unnecessary.

An example of a contention-based two-step random access method will be described. As a first step, the mobile terminal performs random access preamble transmission and uplink transmission to the base station. As a second step, the base station notifies the mobile terminal of the presence or absence of contention. The mobile terminal that has been notified that there is no contention ends the random access processing. The mobile terminal that has been notified that there is a contention performs the processing again from the first step.

The collision-free two-step random access method is different from the contention-based two-step random access method in the following points. That is, prior to the first step, the base station pre-allocates a random access preamble and uplink scheduling to the mobile terminal. In addition, in a second step, the base station transmits a random access response to the mobile terminal.

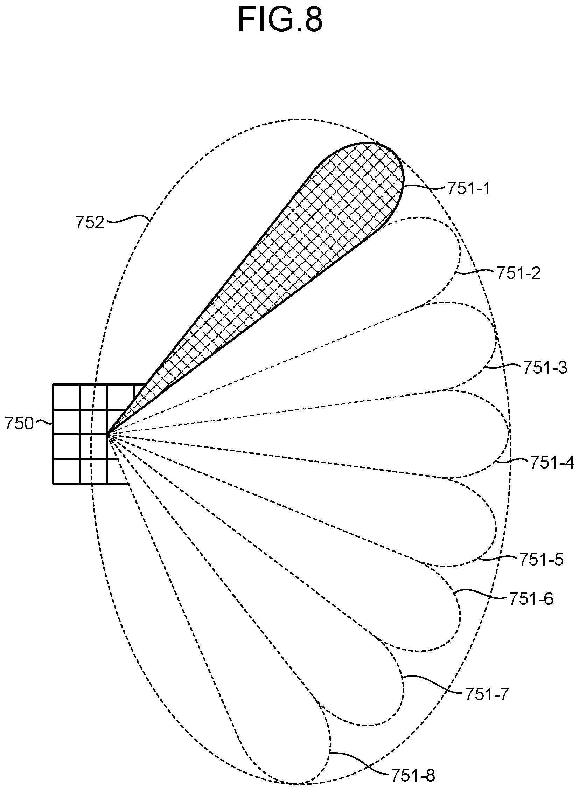

FIG. 8 illustrates an exemplary configuration of a cell in NR. In the NR cell, narrow beams are formed and transmitted in different directions. In the example illustrated in FIG. 8, a base station 750 performs transmission and reception with mobile terminals using a beam 751-1 in a certain time. In another time, the base station 750 performs transmission and reception with mobile terminals using a beam 751-2. Similarly, the base station 750 performs transmission and reception with mobile terminals using one or more of beams 751-3 to 751-8. In this way, the base station 750 configures a wide-range cell 752.

FIG. 8 illustrates an example in which the number of beams the base station 750 uses is eight, but the number of beams may be different from eight. In addition, the number of beams the base station 750 simultaneously uses is one in the example illustrated in FIG. 8, but may be two or more.

The concept of quasi-colocation (QCL) is used to identify the beam (see Non Patent Literature 14 (3GPP TS 38.214)). That is, the beam is identified by information indicating which reference signal (e.g. SS Block, CSI-RS) beam can be regarded as the same as the beam. The information may include information related to the type of information about a viewpoint from which beams can be regarded as the same, for example, information related to Doppler shift, Doppler shift spread, average delay, average delay spread, and spatial Rx parameters (see Non Patent Literature 14 (3GPP TS 38.214)).

3GPP supports sidelink (SL) for device-to-device (D2D) communication and vehicle-to-vehicle (V2V) communication (see Non Patent Literature 1 and Non Patent Literature 16). SL is defined by the PC5 interface.

SL communication is designed to support PC5-S signaling in order to support unicast and groupcast in addition to broadcast (see Non Patent Literature 27 (3GPP TS23.287)). For example, PC5-S signaling is performed to establish a link for performing SL, i.e. PC5 communication. This link is implemented in the V2X layer and is also referred to as the layer 2 link.

In addition, SL communication is designed to support RRC signaling (see Non Patent Literature 27 (3GPP TS23.287)). RRC signaling in SL communication is also referred to as PC5 RRC signaling. Examples of proposed techniques include notification of UE capabilities between UEs that perform PC5 communication, and notification of AS layer settings for performing V2X communication using PC5 communication.

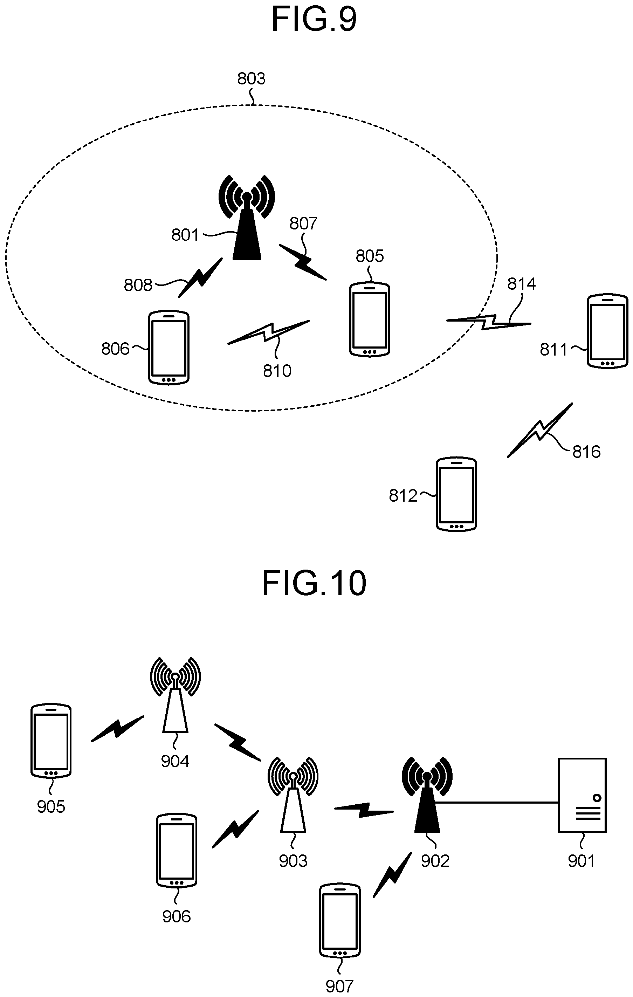

FIG. 9 illustrates an exemplary connection configuration of mobile terminals in the SL communication. In the example illustrated in FIG. 9, a UE 805 and a UE 806 exist within a coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 exist outside the coverage 803. SL communication 814 is performed between the UE 805 and the UE 811. In addition, SL communication 816 is performed between the UE 811 and the UE 812.

As an example of communication between the UE and the NW via a relay in the SL communication, the UE 805 illustrated in FIG. 9 relays communication between the UE 811 and the base station 801.

A configuration similar to that in FIG. 4 may be used for the UE that performs relay. The relay processing in the UE will be described with reference to FIG. 4. The relay processing by the UE 811 in the communication from the UE 805 to the base station 801 will be described. Wireless signals from the base station UE 811 are received by the antennas 307-1 to 307-4. The reception signal is converted from the wireless reception frequency into a baseband signal in the frequency conversion unit 306, and demodulation is performed in the demodulation unit 308. The demodulation unit 308 may perform weight calculation and multiplication. The demodulated data is passed to the decoder unit 309, and decoding such as error correction is performed. The decoded data is passed to the protocol processing unit 301, and protocol processing such as MAC and RLC for use in communication with the UE 811, for example, an operation such as removal of a header in each protocol, is performed. In addition, protocol processing such as RLC and MAC for use in communication with the base station 801, for example, adding a header in each protocol, is performed. In the protocol processing unit 301 of the UE 811, protocol processing of the PDCP and the SDAP may be performed. The data that has undergone the protocol processing is passed to the encoder unit 304 and subjected to encoding such as error correction. Some data may be directly output from the protocol processing unit 301 to the modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to the frequency conversion unit 306 to be converted into a wireless transmission frequency. Thereafter, the transmission signals are transmitted from antennas 307-1 to 307-4 to the base station 801.

Although the example of the relay by the UE 811 in the communication from the UE 805 to the base station 801 has been described above, similar processing is also used in the relay of the communication from the base station 801 to the UE 811.

5G base stations can support Integrated Access and Backhaul (IAB) (see Non Patent Literature 2 and 20). A base station (hereinafter may be referred to as an IAB base station) that supports IAB is constituted by an IAB donor CU that is a CU of a base station that operates as an IAB donor providing the IAB function, an IAB donor DU that is a DU of a base station that operates as an IAB donor, and an IAB node that is connected to the IAB donor DU and to UE using a wireless interface. An F1 interface is provided between the IAB node and the IAB donor CU (see Non Patent Literature 2).

An example connection of the IAB base station is illustrated in FIG. 10. An IAB donor CU 901 is connected to an IAB donor DU 902. An IAB node 903 is connected to the IAB donor DU 902 using a wireless interface. The IAB node 903 is connected to an IAB node 904 using a wireless interface. That is, multi-stage connection of IAB nodes may be performed. A UE 905 is connected to the IAB node 904 using a wireless interface. A UE 906 may be connected to the IAB node 903 using a wireless interface, or a UE 907 may be connected to the IAB donor DU 902 using a wireless interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

In the connection between the IAB donor DU and the IAB node and the connection between the IAB nodes, a Backhaul Adaptation Protocol (BAP) layer is provided (see Non Patent Literature 29). The BAP layer performs operations such as routing of received data to the IAB donor DU and/or the IAB node, mapping to the RLC channel, and the like (see Non Patent Literature 29).

As an example of the configuration of the IAB donor CU, a configuration similar to that of the CU 215 is used.

As an example of the configuration of the IAB donor DU, a configuration similar to that of the DU 216 is used. The protocol processing unit of the IAB donor DU performs processing of the BAP layer, for example, adding a BAP header in downlink data, routing to the IAB node, removing a BAP header in uplink data, and the like.

As an example of the configuration of the IAB node, a configuration without the EPC communication unit 401, the other base station communication unit 402, and the 5GC communication unit 412 illustrated in FIG. 5 may be used.

The transmission/reception processing in the IAB node will be described with reference to FIGS. 5 and 10. The transmission/reception processing of the IAB node 903 in communication between the IAB donor CU 901 and the UE 905 will be described. In the uplink communication from the UE 905 to the IAB donor CU 901, a wireless signal from the IAB node 904 is received by the antenna 408 (some or all of the antennas 408-1 to 408-4). The reception signal is converted from the wireless reception frequency into a baseband signal in the frequency conversion unit 407, and demodulation is performed in a demodulation unit 409. The demodulated data is passed to a decoder unit 410, and decoding such as error correction is performed. The decoded data is passed to the protocol processing unit 403, and protocol processing such as MAC and RLC for use in communication with the IAB node 904, for example, an operation such as removal of a header in each protocol, is performed. In addition, routing to the IAB donor DU 902 using the BAP header is performed, and protocol processing such as RLC and MAC for use in communication with the IAB donor DU 902, for example, an operation of adding a header in each protocol, is performed. The data that has undergone the protocol processing is passed to the encoder unit 405 and subjected to encoding such as error correction. Some data may be directly output from the protocol processing unit 403 to the modulation unit 406 without being subjected to encoding. The encoded data is subjected to modulation in the modulation unit 406. The modulation unit 406 may perform precoding for MIMO. The modulated data is converted into a baseband signal and then output to the frequency conversion unit 407 to be converted into a wireless transmission frequency. Thereafter, transmission signals are transmitted from the antennas 408-1 to 408-4 to the IAB donor DU 902. Similar processing is performed in the downstream communication from the IAB donor CU 901 to the UE 905.

The IAB node 904 also performs transmission/reception processing similar to that of the IAB node 903. In the protocol processing unit 403 of the IAB node 903, as the processing of the BAP layer, for example, processing such as adding a BAP header in uplink communication, routing to the IAB node 904, and removing a BAP header in downstream communication, is performed.

In the NR-based communication system, positioning of the UE in the RRC_INACTIVE state may be performed. The LMF may configure the positioning signal setting so as to transmit the positioning signal (e.g. PRS) at a timing, e.g. on-duration timing, at which the UE can receive the positioning signal. The LMF may configure the positioning signal setting so as to transmit the positioning signal at the paging timing of the UE.

The base station may change the paging timing. For example, the base station may change the paging timing to match the positioning signal setting.

However, the paging timing is determined by using the identifier of the UE and the parameter that is broadcast as system information. Therefore, a change in the paging timing affects the paging timing of other UEs, leading to a problem that the communication system is complicated.

The first embodiment discloses a method for solving this problem.

In order to solve the above problem, in the communication system according to the present embodiment, the base station notifies the LMF of information related to a timing at which the UE can receive a positioning signal.

The timing may be, for example, paging timing or On-duration (see Non Patent Literature 2 (3GPP TS 38.300)) timing in DRX of the UE. The DRX may be, for example, DRX (Connected mode DRX: C-DRX) in the RRC_CONNECTED state, DRX (Idle mode DRX: I-DRX) in the RRC_INACTIVE and/or RRC_IDLE state, or both of the foregoing.

For the notification from the base station to the LMF, NRPPa signaling may be used, for example, NRPPa TRP INFORMATION RESPONSE, NRPPa POSITIONING INFORMATION RESPONSE, or NRPPa POSITIONING INFORMATION UPDATE signaling (see Non Patent Literature 30).

The following items (1) to (6) are disclosed as examples of information included in the notification from the base station to the LMF.
(1) Information related to timing of paging of UE.
(2) Information related to frame timing.
(3) Information for use in deriving paging timing.
(4) Information for identifying UE.
(5) Information related to DRX of UE.
(6) Combinations of (1) to (5).

Information (1) described above may be, for example, a value of Paging Frame (PF), a value of Paging Occasion (PO), a value of PDCCH monitoring occasion for use in paging reception, or a combination of a plurality of the above. The LMF may change the positioning signal setting using the information. Consequently, for example, the amount of processing in changing the setting of the positioning signal transmission/reception timing can be reduced.

As another example, information (1) described above may include information related to the time of the paging timing. The information related to the time may include, for example, the time at the start point of the paging timing, the time related to the end point of the paging timing, information related to the duration of the paging timing, or a plurality of pieces of information described above. The paging timing may be Paging Frame (PF), Paging Occasion (PO), PDCCH monitoring occasion for use in paging reception, or a combination of a plurality of the above. The LMF may change the positioning signal setting using the information. Consequently, for example, the amount of processing in changing the setting of the positioning signal transmission/reception timing can further be reduced.

As an example of information (2) described above, the time at a predetermined time point, for example, the time at a predetermined SFN boundary may be used. The boundary may be the head of the SFN or the tail of the SFN. Other examples may include the time at a predetermined subframe boundary, the time at a predetermined slot boundary, or the time at a predetermined symbol boundary. The LMF may change the positioning signal setting using the information. Consequently, for example, the amount of processing in the LMF can be reduced.

Information (3) described above may include, for example, the identifier of the UE, or parameters for use in determining the paging timing. The parameters may include a part or all of the broadcast information from the base station, for example, PCCH configuration information (PCCH-Config) disclosed in Non Patent Literature 19 (3GPP TS 38.331). The LMF may derive the paging timing of the UE by using the information. Consequently, for example, the amount of processing required in the notification from the UE and/or the base station can be reduced.

The identifier related to information (4) described above may be, for example, UE_ID disclosed in Section 7.1 of Non Patent Literature 38 (3GPP TS 38.304), or may be 5G S-Temporary Mobile Subscription Identifier (5G-S-TMSI), 5G Temporary Mobile Subscription Identifier (5G-TMSI), or 5G-GUTI disclosed in Non Patent Literature 10 (3GPP TS 23.501). The LMF may derive the paging timing of the UE by using the information. Consequently, for example, the amount of processing required in the notification from the UE and/or the base station can be reduced.

Information (5) described above may include, for example, information related to DRX cycle, on-duration start timing, and on-duration length, or a combination of the above. The DRX information may include information related to C-DRX, information related to I-DRX, or both of the foregoing. The information may include a Discontinuous Reception (DRX) cycle (T) of the UE disclosed in Non Patent Literature 38 (3GPP TS 38.304), may include a total number of paging frames (N) in the cycle, may include the number of paging occasions (Ns) in the PF, may include an offset (PF_offset) that is used in the PF determination, or may include a first-PDCCH-Monitoring OccasionOfPO in the PO. The LMF may change the positioning signal setting using the information. Consequently, for example, the amount of processing in the change of the positioning signal setting can be reduced.

The positioning signal setting may include information related to the time, frequency, and/or resources of the code of the positioning signal. The setting may be, for example, a setting related to the PRS or a setting related to the SRS. The settings related to the PRS and/or the SRS may include the parameters disclosed in Non Patent Literature 31 (3GPP TS 37.355) or may include the parameters disclosed in Non Patent Literature 19 (3GPP TS 38.331). The setting of the positioning signal may include, for example, information related to at least one or more of the cycle, offset, duration, frequency resource, and code sequence.

The positioning signal setting may include information related to the target UE. The base station may use the information to determine whether to transmit and/or receive the positioning signal. For example, when the base station does not cover the target UE, the base station may not transmit and receive the positioning signal. Consequently, for example, the power consumption of the base station can be reduced.

The LMF may request the information from the base station. The notification from the base station to the LMF may be performed in response to the request from the LMF. For the request from the LMF, NRPPa signaling, for example, signaling of NRPPa TRP INFORMATION REQUEST may be used, or signaling of NRPPa POSITIONING INFORMATION REQUEST may be used (see Non Patent Literature 30). A new NRPPa signaling may be provided. The new NRPPa signaling may be used. The request from the LMF may include information related to the UE, e.g. the identifier of the UE.

The LMF may use the information to change the PRS setting. The LMF may notify the base station of the changed PRS setting. For the notification from the LMF to the base station, for example, NRPPa signaling may be used. The base station may give the UE broadcast or notification of the changed PRS setting. As another example, the LMF may notify the UE of the changed PRS setting. For the notification from the LMF to the UE, for example, LPP signaling may be used.

The LMF may acquire information related to the base station that covers the UE. Consequently, for example, even when the UE performs cell reselection, the LMF can transmit and receive the NRPPa signaling to and from the base station that covers the UE, and as a result, the positioning of the UE can be promptly executed.

The LMF may acquire information related to TA and/or RNA of the base station that covers the UE. The LMF may acquire information related to base stations that belong to the TA and/or RNA. The LMF may select the positioning base station by using the notification. Consequently, for example, the UE can promptly execute paging associated with cell reselection.

The LMF may request the AMF for information related to the base station that covers the UE. The AMF may notify the LMF of information related to the base station that covers the UE. For example, the AMF may acquire information related to the base station that covers the UE by using paging.

As another example, the LMF may inquire of the base station whether the base station covers the UE. The base station may notify the LMF of information related to whether the base station covers the UE, or information related to the base station that covers the UE. For example, the base station may acquire information related to the base station that covers the UE by using paging.

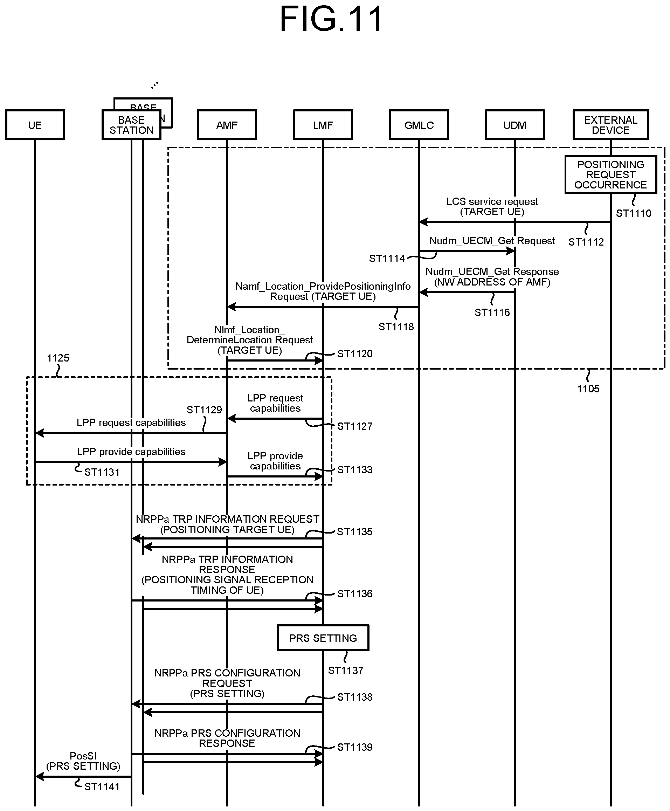

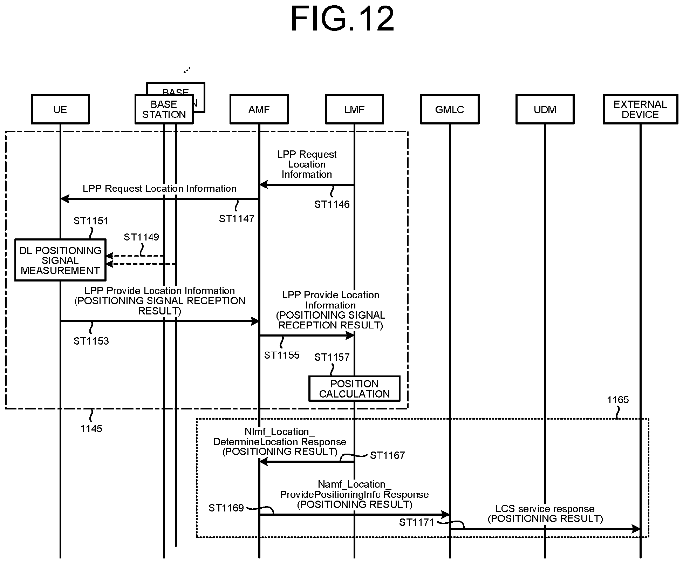

FIGS. 11 and 12 are diagrams illustrating an example of a positioning sequence related to the UE in RRC_INACTIVE. FIG. 11 illustrates the first half of the sequence, and FIG. 12 illustrates the second half of the sequence. FIGS. 11 and 12 illustrate an example of positioning in which a positioning request source device makes a location information request, that is, UE-assisted positioning (positioning in which the LMF or the like performs position calculation using assistance information (e.g. positioning signal reception result) from the UE) (see Non Patent Literature 25) according to a location information request (Mobile-Terminated Location Request: MT-LR) (see Non Patent Literature 25) terminated in the UE. In the example illustrated in FIGS. 11 and 12, a case where Downlink Time Difference of Arrival: (DL-TDOA) (see Non Patent Literature 24) is used as a positioning method for the UE will be described.

In procedure 1105 illustrated in FIG. 11, a positioning request to the LMF is made from an external device. In step ST1110, a positioning request for the UE occurs in the external device. In step ST1112, the external device transmits a positioning request to a gateway mobile location center (GMLC) (see Non Patent Literature 25). The request may include information related to the UE, for example, the identifier of the UE.

In step ST1114 illustrated in FIG. 11, the GMLC inquires of the UDM about the NW address of the AMF. In step ST1116, the UDM notifies the GMLC of the NW address of the AMF.

In step ST1118 illustrated in FIG. 11, the GMLC transfers the positioning request from the external device to the AMF. The request may include information related to the UE, for example, the identifier of the UE. In step ST1120, the AMF transfers the request to the LMF. The request transferred from the AMF to the LMF may include information related to the UE, for example, the identifier of the UE.

In procedure 1125 illustrated in FIG. 11, the operation of acquiring the positioning capability of the UE by the LMF is performed. In steps ST1127 and ST1129, a positioning capability request is made from the LMF to the UE. In the example illustrated in FIG. 11, the request is made via the AMF. Step ST1127 indicates the request from the LMF to the AMF, and step ST1129 indicates the request from the AMF to the UE. In steps ST1127 and ST1129, for example, signaling of LPP request capabilities is used. In steps ST1131 and ST1133, the UE notifies the LMF of the positioning capability. In the example illustrated in FIG. 11, the notification is given via the AMF. Step ST1131 indicates the notification from the UE to the AMF, and step ST1133 indicates the notification from the AMF to the LMF. In steps ST1131 and ST1133, for example, signaling of LPP provide capabilities is used.

In step ST1135 illustrated in FIG. 11, the LMF requests information related to the resources of positioning signals from the base station. For the request, for example, signaling of NRPPa TRP INFORMATION REQUEST (see Non Patent Literature 30) may be used. The request in step ST1135 may be made to a positioning base station which is a base station that is used for positioning of the UE. The request may be made to a plurality of base stations.

In step ST1135, information related to the UE, for example, the identifier of the UE, may be included, or a request for information related to the positioning signal reception timing of the UE may be included. The request for information related to the positioning signal reception timing of the UE may be, for example, a request for DRX-related information of the UE or a request for information related to the paging timing of the UE. The signaling in step ST1135 including the information related to the UE and/or the request for the information related to the positioning signal reception timing of the UE may be performed on the serving base station of the UE.

In step ST1136 illustrated in FIG. 11, the base station notifies the LMF of information related to the resources of positioning signals. For the notification, for example, signaling of NRPPa TRP INFORMATION RESPONSE (see Non Patent Literature 30) may be used. The signaling of step ST1136 may be transmitted by the serving base station of the UE, by a neighboring base station, or by both of the foregoing.

The information to be provided by the base station to the LMF in step ST1136 may include information related to the positioning signal reception timing of the UE. The information may be, for example, DRX-related information of the UE or information related to the paging timing of the UE. The information may include the above-described information items (1) to (6). The signaling in step ST1136 including the information may be performed by the serving base station of the UE.

In step ST1137 illustrated in FIG. 11, the LMF determines the setting of the positioning signal, for example, PRS. In step ST1138, the LMF requests the determined positioning signal setting from the base station. For the request, for example, signaling of NRPPa PRS CONFIGURATION REQUEST (see Non Patent Literature 30) may be used. The base station configures the positioning signal setting using the setting information included in the request received in step ST1138. In step ST1139, the base station gives the LMF a response to step ST1138. For the response, for example, signaling of NRPPa PRS CONFIGURATION RESPONSE (see Non Patent Literature 30) may be used. In step ST1141, the base station gives the UE broadcast or notification of system information related to the positioning signal. The system information may include the positioning signal setting.

In procedure 1145 illustrated in FIG. 12, processing from the positioning request to the position calculation is performed. In steps ST1146 and ST1147, the LMF requests the UE for positioning-related information. In the example illustrated in FIG. 12, the request is made via the AMF. Step ST1146 indicates the request from the LMF to the AMF, and step ST1147 indicates the request from the AMF to the UE. For the request, for example, signaling of LPP Request Location Information (see Non Patent Literature 31) may be used. The request may include information related to the positioning method, or may include information related to the resources of the positioning signal that the base station transmits to the UE.

In step ST1149 illustrated in FIG. 12, the base station transmits a positioning signal to the UE. For the signal, for example, a positioning reference signal (PRS) may be used. In step ST1151, the UE measures the positioning signal from the base station.

In steps ST1153 and ST1155 illustrated in FIG. 12, the UE notifies the LMF of the positioning signal reception result. The notification is given via the AMF. Step ST1153 indicates the notification from the UE to the AMF, and step ST1155 indicates the notification from the AMF to the LMF. Signaling of LPP Provide Location Information (see Non Patent Literature 31) may be used for the notification in step ST1153 and/or step ST1155.

In step ST1157 illustrated in FIG. 12, the LMF calculates the position of the UE. The LMF may perform the calculation using the positioning signal reception result provided in step ST1155.

In procedure 1165 illustrated in FIG. 12, processing of notification of the positioning result is performed.

In step ST1167 illustrated in FIG. 12, the LMF notifies the AMF of the positioning result. In step ST1169 illustrated in FIG. 12, the AMF notifies the GMLC of the positioning result. In step ST1171, the GMLC notifies the external device of the positioning result.

FIGS. 11 and 12 illustrate the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIGS. 11 and 12, Downlink Angle of Departure (DL-AoD), NR Enhanced Cell ID (NR E-CID), or another positioning method may be used. For example, in positioning using DL-AoD, power consumption of the UE can also be reduced.

Although FIGS. 11 and 12 disclose the case where the positioning method in which the UE receives the positioning signal is used, a positioning method in which the UE transmits the positioning signal may be used, or a positioning method in which the UE performs both transmission and reception of the positioning signal, for example, multi-round trip time (Multi-RTT), may be used. Consequently, for example, the positioning accuracy can be improved.

Although the example of the UE-assisted positioning is illustrated in FIGS. 11 and 12, this may be applied to UE-based positioning (positioning in which the UE performs position calculation) (see Non Patent Literature 25) or may be applied to NW-assisted positioning (positioning in which an NW-side device, for example, a base station, provides notification of the positioning signal reception result) (see Non Patent Literature 25). Consequently, for example, a similar effect can be obtained in UE-based positioning and NW-assisted positioning.

Although the example of MT-LR is illustrated in FIGS. 11 and 12, this may be applied to a location information request (mobile-originated location request: MO-LR) (see Non Patent Literature 25) initiated in the UE, or may be applied to a location information request (network-initiated location request: NI-LR) (see Non Patent Literature 25) initiated in a NW-side device, for example, the AMF. A similar effect can be obtained in MO-LR and/or NI-LR.

Paging for positioning signal measurement requests may be provided. For example, paging may include information indicating that a positioning signal measurement request is included. The paging may include information related to the resource including information related to the positioning signal measurement request. For example, instead of step ST1147 illustrated in FIG. 12, the paging may be used, or notification of the information from the AMF to the base station and/or signaling of the instruction for the paging may be used. By means of the information, the UE may recognize the start of positioning, or may acquire a positioning signal measurement request. Consequently, for example, the UE can promptly start the positioning signal reception.

The UE may transmit the positioning signal reception result (for example, step ST1153 in FIG. 12) by small data transmission (SDT). The small data transmission may be performed, for example, by using message 3 and/or message A in the random access. The UE need not transition from the RRC_IDLE or RRC_INACTIVE state to the RRC_CONNECTED state. Consequently, for example, the power consumption of the UE can be reduced.

Disclosed below are other solutions. The UE notifies the LMF of information related to a timing at which a positioning signal can be received. The UE may include the information in existing LPP signaling to give the notification. For example, the information may be included in the positioning-related capability to be provided by the UE to the LMF. For example, signaling of LPP provide capabilities (Non Patent Literature 31) may be used to provide notification of the positioning-related capability.

The information to be provided by the UE to the LMF may be similar to the above-described information items (1) to (6).

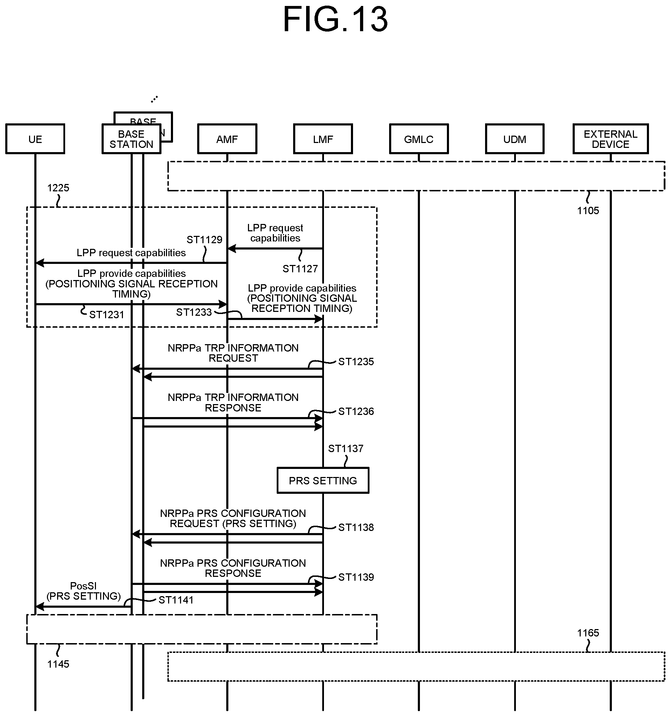

FIG. 13 is a diagram illustrating a first other example of a positioning sequence related to the UE in RRC_INACTIVE. FIG. 13 illustrates an example of UE-assisted positioning according to MT-LR. In the example illustrated in FIG. 13, a case where DL-TDOA is used as the UE positioning method will be described. In FIG. 13, processes similar to those in FIGS. 11 and 12 are denoted by the same reference signs, and descriptions already provided are omitted.

In procedure 1225 illustrated in FIG. 13, the operation of acquiring the positioning capability of the UE by the LMF is performed. Steps ST1127 and ST1129 are similar to those in FIG. 11. In steps ST1231 and ST1233, the UE notifies the LMF of the positioning capability. In the example illustrated in FIG. 13, the notification is given via the AMF. Step ST1231 indicates the notification from the UE to the AMF, and step ST1233 indicates the notification from the AMF to the LMF. In steps ST1231 and ST1233, for example, signaling of LPP provide capabilities is used. Steps ST1231 and ST1233 include information related to the positioning signal reception timing in the UE.

In step ST1235 illustrated in FIG. 13, the LMF requests information related to the resources of positioning signals from the base station. For the request, for example, signaling of NRPPa TRP INFORMATION REQUEST (see Non Patent Literature 30) may be used. The request in step ST1235 may be made to the positioning base station. The request may be made to a plurality of base stations.

In step ST1236 illustrated in FIG. 13, the base station notifies the LMF of information related to the resources of positioning signals. For the notification, for example, signaling of NRPPa TRP INFORMATION RESPONSE (see Non Patent Literature 30) may be used. The signaling of step ST1236 may be transmitted by the serving base station of the UE, by a neighboring base station, or by both of the foregoing.

Step ST1137 to procedure 1165 illustrated in FIG. 13 are similar to those in FIGS. 11 and 12.

FIG. 13 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 13, other positioning methods may be used as in FIGS. 11 and 12. Other positioning methods may include a positioning method in which the UE transmits a positioning signal. A similar effect can be obtained in other positioning methods.

In FIG. 13, UE-based positioning may be used, or NW-assisted positioning may be used. In addition, in FIG. 13, positioning associated with MO-LR and/or positioning associated with NI-LR may be used. Consequently, for example, a similar effect can be obtained in these positioning methods.

As another example, the UE may include the information in the request to change the positioning signal setting to give the notification to the LMF. The request to change the positioning signal setting from the UE to the LMF may be, for example, on-demand PRS request (see Non Patent Literatures 40 and 41). For the request, for example, signaling of LPP request assistance data (see Non Patent Literature 31) may be used. The information that the UE includes in the request to give the notification to the LMF may be similar to the above-described information items (1) to (6) .

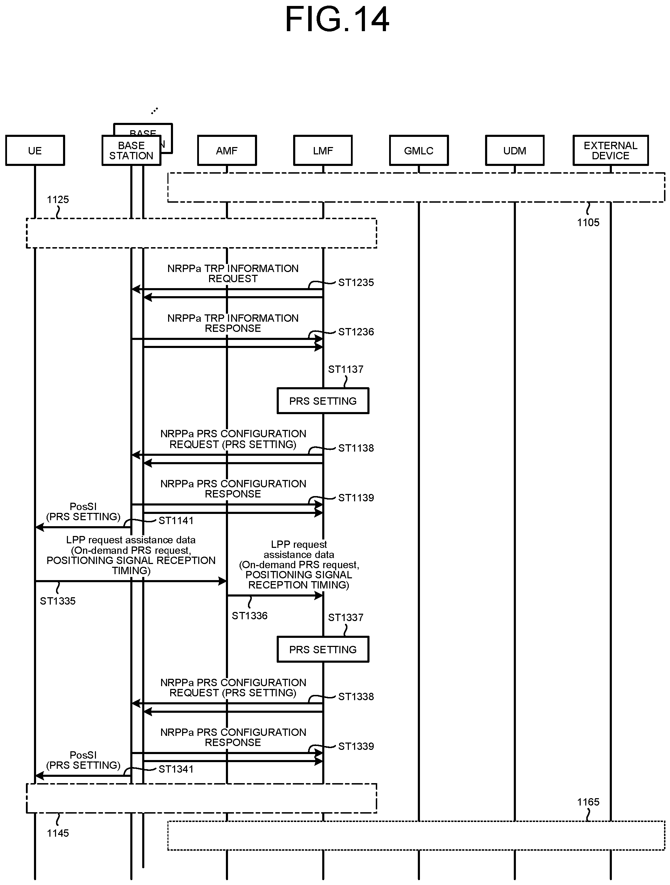

FIG. 14 is a diagram illustrating a second other example of a positioning sequence related to the UE in RRC_INACTIVE. FIG. 14 illustrates an example of UE-assisted positioning according to MT-LR. In the example illustrated in FIG. 14, a case where DL-TDOA is used as the UE positioning method will be described. In FIG. 14, processes similar to those in FIGS. 11, 12, and 13 are denoted by the same reference signs, and descriptions already provided are omitted.

Procedures 1105 and 1125 illustrated in FIG. 14 are similar to those in FIG. 11.

Steps ST1235 and ST1236 illustrated in FIG. 14 are similar to those in FIG. 13.

Steps ST1137 to ST1141 illustrated in FIG. 14 are similar to those in FIG. 11.

In steps ST1335 and ST1336 illustrated in FIG. 14, the UE requests the LMF to change the positioning signal setting. In the example illustrated in FIG. 14, the request is made via the AMF. Step ST1335 indicates the request from the UE to the AMF, and step ST1336 indicates the request from the AMF to the LMF. For steps ST1335 and ST1336, for example, signaling of LPP request assistance data is used. The request may include information related to the positioning signal reception timing in the UE, for example, the above-described information items (1) to (6). The request may include information indicating on-demand PRS request. In step ST1337, the LMF configures the positioning signal setting. The information included in step ST1336 may be used for the setting.

In steps ST1338 to ST1341 illustrated in FIG. 14, operations similar to those in steps ST1138 to ST1141 are performed.

Procedures 1145 and 1165 illustrated in FIG. 14 are similar to those in FIG. 12.

FIG. 14 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 14, other positioning methods may be used as in FIGS. 11 and 12. Other positioning methods may include a positioning method in which the UE transmits a positioning signal. A similar effect can be obtained in other positioning methods.

In FIG. 14, UE-based positioning may be used, or NW-assisted positioning may be used. In addition, in FIG. 13, positioning associated with MO-LR and/or positioning associated with NI-LR may be used. Consequently, for example, a similar effect can be obtained in these positioning methods.

Disclosed below are other solutions. A positioning signal reception timing is newly provided. For example, the timing may be newly provided in addition to the paging timing of the UE. The UE may receive the positioning signal at the positioning signal reception timing and/or the paging timing. Consequently, for example, flexibility in the communication system can be improved.

The LMF may notify the UE of information related to the newly provided timing. The notification may be given using LPP signaling, for example, signaling of LPP provide assistance data, or may be given using system information via NRPPa signaling.

Information related to the timing may include, for example, information related to the cycle or information related to the offset with respect to the cycle.

The timing may be fixed in RNA. Consequently, for example, the fixed timing can be used in the cell reselection destination in the cell reselection of the UE, and as a result, it is not necessary to change the setting of the timing according to the cell reselection. As another example, the timing may be fixed in the tracking area. Consequently, for example, the same effect as described above can be obtained even when cell reselection to the outside of RNA occurs.

The LMF may acquire information related to TA and/or RNA of the base station that covers the UE. The LMF may acquire information related to base stations that belong to the TA and/or RNA. The base station may notify the LMF of the information.

The timing may be provided individually for each UE. Consequently, for example, the flexibility related to the setting of the timing can be improved. As another example, the timing may be common among UEs. Consequently, for example, the complexity related to the setting of the timing can be avoided.

The UE may start the reception operation of the positioning signal at the newly provided timing in response to notification or broadcast of information related to the timing. Consequently, for example, complexity in the reception operation of the UE can be avoided. As another example, the UE may start the reception operation in response to reception of a positioning signal reception request, for example, signaling of LPP request location information. Consequently, for example, the power consumption of the UE can be reduced.

Disclosed below are other solutions. The base station configures the positioning signal setting. The base station may configure the positioning signal setting regardless of the positioning signal setting provided from the LMF. The base station may notify the LMF of the determined setting. For the notification, for example, NRPPa signaling may be used. The LMF may reflect or reject the positioning signal setting provided from the base station, or reflect the positioning signal setting partially changed. As an example of the partial change, the cycle may be changed, for example, changed to one-integer or an integer multiple, or the offset may be changed with respect to the cycle. The partial change can improve the flexibility of the positioning procedure in the communication system, for example. The LMF may notify the base station of information related to reflection, rejection, and partial change of the setting.

Disclosed below are other solutions. The base station transmits a positioning signal at a timing at which the UE can receive the positioning signal. The transmission may be executed regardless of the positioning signal setting. The base station may transmit a positioning signal at the paging timing of the UE. The base station may transmit a positioning signal within the range of time/frequency resources of paging of the UE, for example, within the range of time/frequency resources of the PDCCH and/or the PDSCH of the paging. As another example, the base station may transmit a positioning signal instead of the paging of the UE. The base station may transmit a positioning signal in a slot in which paging is transmitted. Consequently, for example, wireless resources in the communication system can be saved.

In the foregoing resources, rate matching may be performed. For example, rate matching may be performed in a slot in which a positioning signal is transmitted. The base station may notify the UE that the rate matching is performed, or as another example, the UE may perform decoding on the assumption that the rate matching is performed in the resource on which the positioning signal is transmitted. Consequently, for example, the reliability of reception of time/frequency resources including the positioning signal can be improved in the UE.

Setting that the positioning signal is included in the resource may be configured for the UE. The setting may be configured by the base station, the AMF, or the LMF. For example, the base station may notify the UE or the LMF of the setting. The AMF may notify the base station, the UE, or the LMF of the setting. The LMF may notify the AMF, the base station, or the UE of the setting.

The PRS may not be mapped to a resource (e.g. Resource Element (RE)) to which the DMRS is allocated. Consequently, for example, deterioration in the demodulation performance of downlink signals in the UE can be prevented.

The DMRS may not be mapped to a resource (e.g. RE) to which the PRS is allocated. Consequently, for example, deterioration in the positioning accuracy can be prevented.

In a case where the DMRS resource and the PRS resource collide, which RS is to be mapped may be determined by a standard, by the base station, by the AMF, or by the LMF. The base station may notify the UE or the LMF of the setting. The AMF may notify the base station, the UE, or the LMF of the setting. The LMF may notify the AMF, the base station, or the UE of the setting. For example, determining by the base station, the AMF, and/or the LMF can improve flexibility in the communication system.

Disclosed below are other solutions. The positioning signal setting may include setting for conformity to paging. For example, a value indicating conformity to paging may be included as an option that can be taken for the setting value of the cycle, the offset, and/or the duration of the positioning signal. Consequently, for example, the complexity related to the positioning signal setting can be avoided. An explicit setting value may be provided for any one of the cycle and the offset of the positioning signal. Consequently, for example, the flexibility related to the positioning signal setting can be improved. The information may include information for identifying the UE. Consequently, for example, it is possible to prevent malfunction such as transmission of a positioning signal in conformity to the paging timing of another UE.

Disclosed below are other solutions. The paging timing of the UE is changed. For example, the UE-ID is changed.

The UE may request the AMF to change the identifier of the UE itself. The request may include one or more UE identifiers as change candidates. The request may include information related to the reason. The information may be, for example, matching the paging timing and the positioning signal reception timing. NAS signaling may be used for the request. A new NAS signaling may be provided. For example, signaling of UE configuration update request from the UE to the AMF may be provided. The UE may notify the AMF using the newly provided NAS signaling.

The request may be made by the base station. The base station may request the AMF to change the identifier of the UE. The request may include one or more UE identifiers as change candidates. The request may include information related to the reason. The information may be, for example, matching the paging timing and the positioning signal reception timing. For the request, for example, signaling in the N2 interface may be used. New signaling, for example, signaling of N2UE configuration update request may be provided and used. The identifier of the UE may be, for example, UE_ID disclosed in Section 7.1 of Non Patent Literature 38 (3GPP TS 38.304), or may be 5G S-Temporary Mobile Subscription Identifier (5S-TMSI), 5G Temporary Mobile Subscription Identifier (5G-TMSI), or 5G-GUTI disclosed in Non Patent Literature 10 (3GPP TS 23.501). The AMF may change the identifier of the UE by using the signaling.

The base station may notify the AMF of information that is used for paging collision avoidance. The base station may include the information in the request for the identifier of the UE to give the notification. The information may include the above-described information items (1) to (6). The base station may convert the information provided from the UE into signaling in the N2 interface and give the notification. The AMF may change the identifier of the UE using the information. Consequently, for example, the paging timing can be changed only for a predetermined UE without affecting the paging timing of other UEs located in the base station.

The AMF may notify the UE of the changed identifier. For the notification, NAS signaling, for example, CONFIGURATION UPDATE COMMAND disclosed in Non Patent Literature 39 (3GPP TS24.501) may be used. The identifier may be, for example, 5G S-Temporary Mobile Subscription Identifier (5G-S-TMSI) disclosed in Non Patent Literature 10 (3GPP TS23.501). The UE may update the UE-ID of the UE itself using the notification.

The UE may notify the AMF of completion of the identifier update of the UE itself. For the notification, NAS signaling, for example, CONFIGURATION UPDATE COMPLETE disclosed in Non Patent Literature 39 (3GPP TS24.501) may be used.

The AMF may notify the base station of the changed identifier. For the notification, for example, signaling on the N2 interface may be used. The base station may change the paging timing of the UE using the notification. For example, the base station may change the parameter for use in determining the paging timing by using the changed identifier of the UE. Consequently, for example, the flexibility of changing the paging timing in the UE can be improved. The notification of the changed parameter from the base station to the UE may be the same as described above.

Disclosed below are other solutions. A UE-ID for positioning signal reception is newly provided. The UE may perform the reception operation at the paging timing derived from the UE-ID for positioning signal reception. The UE may perform the positioning signal reception operation at the paging timing. Consequently, for example, the reception operation of the positioning signal at the paging timing of the UE itself can be performed without affecting the paging timing of other UEs, and as a result, the power consumption of the UE can be reduced.

The UE-ID may be given to each UE or may be given in common to a plurality of UEs. For example, by giving the UE-ID common to a plurality of UEs, the efficiency of the communication system can be improved.

The UE-ID may be determined by the AMF. Consequently, for example, overlapping of UE-IDs with other UEs in the communication system can be avoided. As another example, the UE-ID may be determined by the LMF. Consequently, for example, complexity in the setting related to positioning can be avoided. As another example, the UE-ID may be determined by the base station. Consequently, for example, the setting related to the UE-ID can be promptly executed. The UE-ID may be provided as notification to the UE. For the notification, for example, NAS signaling, LPP signaling, RRC signaling, NRPPa signaling, or broadcast of system information may be used.

The UE may have a plurality of UE-IDs. The UE may perform the reception operation using one of the paging timings derived from each UE-ID, or may perform the reception operation using a plurality of the paging timings. Consequently, for example, flexibility in the paging timing setting of the UE can be improved. Some of the plurality of UE-IDs held by the UE may be UE-IDs for positioning signals.

Activation/deactivation of the UE-ID may be performed. The UE may perform the reception operation at the paging timing derived from the activated UE-ID, may use the UE-ID for downlink reception, or may use the UE-ID for uplink transmission. The UE may not perform the reception operation at the paging timing derived from the deactivated UE-ID, may not use the UE-ID for downlink reception, or may not use the UE-ID for uplink transmission. Consequently, for example, flexibility in the communication system can be improved.

Activation/deactivation of the UE-ID may be performed by the AMF, by the LMF, or by the base station. For the activation/deactivation, for example, NAS signaling, LPP signaling, RRC signaling, NRPPa signaling, broadcast of system information, MAC signaling, or L1/L2 signaling may be used. The activation/deactivation may be performed for each UE-ID or may be collectively performed for a plurality of UE-IDs. Signaling that is used for the activation/deactivation may be provided for each UE-ID or may be provided in common for a plurality of UE-IDs.

According to the first embodiment, the positioning signal can be transmitted in accordance with the timing at which the UE can receive the positioning signal, and as a result, the power consumption of the UE can be reduced.

### First Modification of First Embodiment.

The LMF may request the positioning capability of the UE from the UE. The UE may notify the LMF of the positioning capability. The notification may be given in response to the request from the LMF to the UE. The request may be made for each positioning procedure.

However, because notification from the UE to the LMF occurs for each positioning procedure, there arises a problem that the power consumption of the UE increases and it takes time to complete the positioning procedure.

The first modification discloses a method for solving this problem.

In order to solve the above problem, in the communication system according to the present modification, the AMF performs signaling transmission and reception with the LMF on behalf of the UE.

The AMF may hold information related to the UE. The information may be, for example, the positioning capability of the UE.

The AMF may acquire information related to the UE in advance. The UE may notify the AMF of the information in advance. The UE may include the information in message 3 and/or message A of the random access processing, or may include the information in the signaling of uplink NAS message transfer (see Non Patent Literature 19). The AMF may hold the information provided from the UE.

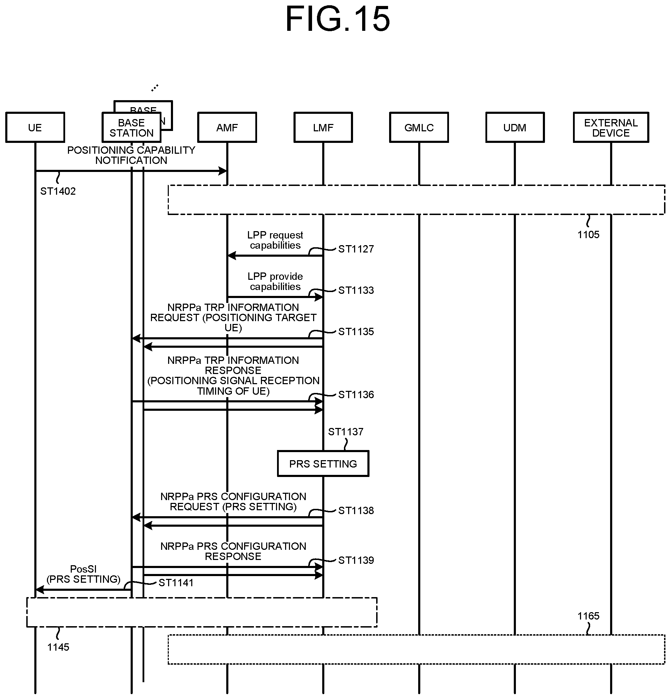

FIG. 15 is a sequence diagram illustrating an example of a positioning sequence in which the UE notifies the AMF of the positioning capability of the UE in advance. The example illustrated in FIG. 15 illustrates a case where the AMF holds the positioning capability of the UE as information related to the UE. In FIG. 15, processes similar to those in FIGS. 11 and 12 are denoted by the same reference signs, and descriptions already provided are omitted.

In step ST1402 illustrated in FIG. 15, the UE notifies the AMF of the positioning capability. The AMF holds the information.

Procedure 1105 illustrated in FIG. 15 is similar to that in FIG. 11.

Step ST1127 illustrated in FIG. 15 is similar to that in FIG. 11. In step ST1133, the AMF notifies the LMF of the information acquired in step ST1402. Transfer of the request from the AMF to the UE in step ST1127 is not performed. Notification from the UE to the AMF in response to the transfer of the request from the AMF to the UE is not performed.

Step ST1135 to procedure 1165 illustrated in FIG. 15 are similar to those in FIGS. 11 and 12.

FIG. 15 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 15, other positioning methods may be used as in FIGS. 11 and 12. Other positioning methods may include a positioning method in which the UE transmits a positioning signal. A similar effect can be obtained in other positioning methods.

In FIG. 15, UE-based positioning may be used, or NW-assisted positioning may be used. In addition, in FIG. 15, positioning associated with MO-LR and/or positioning associated with NI-LR may be used. Consequently, for example, a similar effect can be obtained in these positioning methods.

Request for and notification of information may be made between the UE and the LMF. The request and the notification may be made via the AMF. The AMF may hold the information that is provided by the UE to the LMF. In re-request for the information from the LMF to the UE, the AMF may notify the LMF of the held information instead of the UE. The AMF may not transfer the request to the UE again.

A valid period may be provided in the information of the UE held by the AMF. The valid period may be determined by a standard, determined by the AMF, determined by the LMF and provided as notification to the AMF, or determined by the base station and provided as notification to the AMF. Consequently, for example, it is possible to prevent malfunction related to positioning due to use of old information.

The AMF may update the held information of the UE. The update may be performed, for example, by the AMF acquiring the information provided from the UE to the LMF via the AMF, or may be performed by the UE notifying the AMF of the information. The AMF may request the information from the UE. The notification from the UE to the AMF may be performed in response to the request from the AMF.

As another solution, the base station may have the function of serving on behalf of the UE. The base station may hold information related to the UE. The information may be, for example, the positioning capability of the UE, or may be the information items (1) to (6) disclosed in the first embodiment.

The base station may acquire information related to the UE in advance. The UE may notify the base station of the information in advance. The UE may include the information in message 3 and/or message A of the random access processing, or may include the information in the RRC signaling. The base station may hold the information provided from the UE.

The LMF may request information related to the UE from the base station. The request may be made using, for example, NRPPa signaling. For example, the request for the positioning capability of the UE may be made using NRPPa signaling. The base station may not transfer the request to the UE. The base station may notify the LMF of the held information. For the notification, for example, NRPPa signaling may be used. For example, NRPPa signaling may be used for the notification of the positioning capability of the UE.

The base station and/or the AMF may perform signaling transmission and reception with the UE on behalf of the LMF. For example, the operation may be performed in positioning associated with MO-LR. Consequently, for example, the positioning procedure can be promptly executed.

According to the first modification, notification from the UE to the LMF becomes unnecessary, and as a result, it is possible to reduce power consumption of the UE and to speed up the positioning procedure.

### Second Embodiment.

In the positioning of the UE in the RRC_INACTIVE and/or RRC_IDLE state, the AMF or the LMF does not grasp the base station that covers the UE. Therefore, the LMF does not know the base station to which NRPPa signaling is transmitted, and resulting in a problem that the positioning procedure cannot be executed promptly.

The second embodiment discloses a method for solving this problem.

In order to solve the above problem, in the communication system according to the present embodiment, the LMF acquires information related to the base station that covers the positioning target UE.

The UE may notify the LMF of the information. For example, the UE may give notification of the information using LPP signaling. The UE may give notification of the information in response to paging, or in response to random access processing.

As another example, the base station may notify the LMF of the information. For example, the base station may give notification of the information using NRPPa signaling. The information provided as notification by the base station may include, for example, information related to the base station that covers the UE, or may include information indicating whether the base station covers the UE. The UE may notify the base station of information indicating that the UE itself is in the positioning procedure, information indicating that the UE itself has received the LPP signaling, or information indicating that the UE itself transmits the LPP signaling. The notification from the UE to the base station may include information for identifying the LMF. Message 3 and/or message A of the random access may be used for the notification from the UE to the base station. The base station may notify the LMF of the above-described information in response to the notification.

The function of Minimization of Drive Tests (MDT) (see Non Patent Literature 42 (3GPP TS 37.320)) may be used for notification of the information. For example, the UE may notify the base station of the measurement result of the MDT. The base station may notify the AMF or the LMF of the notification. The AMF may notify the LMF. The UE may notify the AMF or the LMF of the measurement result. The LMF may acquire information related to the base station that covers the UE using the information. Consequently, for example, complexity in the communication system can be avoided.

The measurement result may include only the latest measurement result. Consequently, for example, the size of the notification can be reduced, and as a result, the efficiency in the communication system can be improved. As another example, the measurement result may include a plurality of measurement results. The plurality of measurement results may include a measurement result before the latest measurement result. Consequently, for example, the LMF can promptly predict the base station that covers the UE currently.

The UE may periodically perform the measurement. Consequently, for example, the LMF can quickly grasp the base station that covers the UE currently even when the UE is moving.

The UE may start the measurement using the MDT in response to the start of the positioning procedure of UE itself, or may start the measurement in response to the paging. Consequently, for example, signaling in the communication system can be reduced.

The notification from the UE may include information related to the base station, information related to the measurement result, or information related to the time of measurement. The information related to the base station may include, for example, the identifier of the base station or the identifier of a cell. The information related to the measurement result may include a predetermined number of measurement results from the top, or may include measurement results equal to or greater than or better than a predetermined threshold.

The UE may recognize the start of the positioning procedure of the UE itself in response to reception of signaling (LPP request capabilities) of the positioning capability request from the LMF, in response to transmission of signaling (LPP request assistance data) of the assistance data request to the LMF, in response to reception of signaling (LPP provide assistance data) of provision of assistance data from the LMF, or in response to reception of signaling (LPP request location information) of the positioning information request from the LMF. The UE may recognize the end of the positioning procedure of the UE itself in response to transmission of signaling (LPP provide location information) of positioning information notification to the LMF. As another example, the UE may recognize the start of the positioning procedure of the UE itself in response to a location information request from the UE itself to the AMF, or in response to reception of a location information response from the AMF. For example, in the positioning in which the UE makes the location information request, that is, in the MO-LR, the start of the positioning procedure may be recognized in response to transmission of a location information request to the AMF, or the end of the positioning procedure may be recognized in response to reception of a location information response from the AMF.

As another example, the AMF may notify the LMF of the information. The AMF may include the information in LPP signaling provided from the UE to the LMF via the AMF to give the notification, or may give the notification using another signaling. The AMF may acquire the information from the UE or the base station. The UE may notify the AMF of the information. Message 3 and/or message A of the random access may be used for the notification, for example. The base station may notify the AMF of the information. The information provided as notification to the AMF by the base station may include, for example, information related to the base station that covers the UE, or may include information indicating whether the base station covers the UE.

The subject that notifies the LMF of the information may vary depending on the RRC state of the UE, or may vary depending on the Connection Management (CM) state of the UE. For example, when the UE is in the RRC_IDLE state, the AMF may notify the LMF of the information, or when the UE is in the RRC_INACTIVE state, the base station may notify the LMF of the information. As another example, when the UE is in the CM_IDLE state, the AMF may notify the LMF of the information, or when the UE is in the CM_CONNECTED state, the base station may notify the LMF of the information.

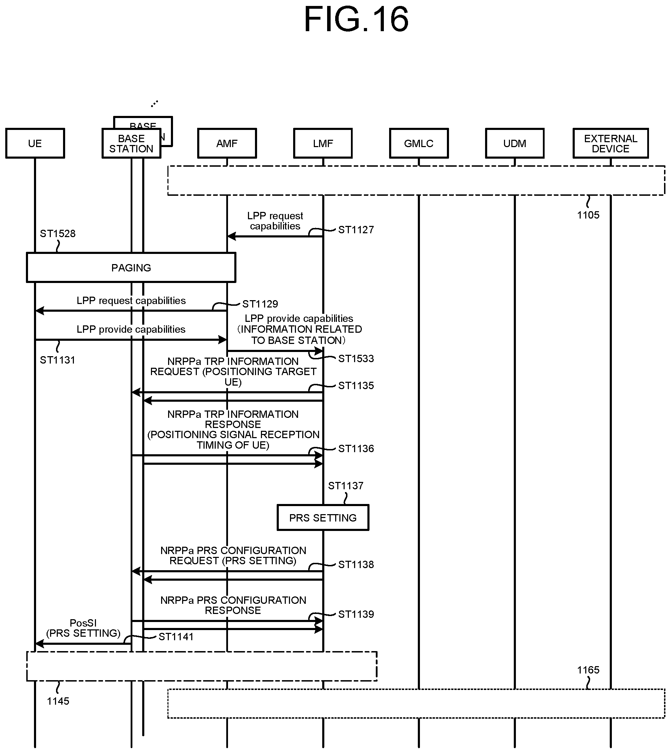

FIG. 16 is a sequence diagram illustrating an example of a positioning sequence in which the AMF notifies the LMF of information related to the base station that covers the UE. The example illustrated in FIG. 16 illustrates a case where the UE is in the RRC_IDLE state. FIG. 16 illustrates an example in which paging of the UE is performed in the positioning capability request from the LMF. In FIG. 16, processes similar to those in FIGS. 11 and 12 are denoted by the same reference signs, and descriptions already provided are omitted.

Procedure 1105 and step ST1127 illustrated in FIG. 16 are similar to those in FIG. 11.

In step ST1528 illustrated in FIG. 16, paging from the AMF to the UE is performed.

Steps ST1129 and ST1131 illustrated in FIG. 16 are similar to those in FIG. 11.

In step ST1533 illustrated in FIG. 16, information related to the positioning capability of the UE is provided from the AMF to the LMF. For example, signaling of LPP provide capabilities (Non Patent Literature 31) may be used. The information that the AMF notifies the LMF in step ST1533 may include information related to the base station that covers the UE. The LMF uses step ST1533 to acquire information related to the base station that covers the UE.

Step ST1135 to procedure 1165 illustrated in FIG. 16 are similar to those in FIGS. 11 and 12.

FIG. 16 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 16, other positioning methods may be used as in FIGS. 11 and 12. Other positioning methods may include a positioning method in which the UE transmits a positioning signal. A similar effect can be obtained in other positioning methods.

In FIG. 16, UE-based positioning may be used, or NW-assisted positioning may be used. In addition, in FIG. 16, positioning associated with MO-LR and/or positioning associated with NI-LR may be used. Consequently, for example, a similar effect can be obtained in these positioning methods.

Along with the cell reselection of the UE, the positioning signal reception timing of the UE, for example, the paging timing of the UE, may not be changed. The UE may use the positioning signal setting before the cell reselection as it is after the cell reselection. Consequently, complexity in the communication system can be avoided.

As another example, along with the cell reselection of the UE, the positioning signal reception timing of the UE, for example, the paging timing of the UE, may be changed. The base station may notify the LMF of information related to the reception timing of the UE. The LMF may change the positioning signal setting using the information. For the notification from the base station to the LMF, for example, the notification disclosed in the first embodiment may be used.

Along with the cell reselection of the UE, the base station for use in positioning may be switched. The base station may be, for example, a neighboring base station. There may be both a positioning base station in which switching occurs and a positioning base station in which switching does not occur. The LMF may switch the base station for use in positioning in response to the cell reselection of the UE.

The LMF may notify the base station after switching of information related to the positioning signal setting. For the notification, NRPPa signaling, for example, signaling of NRPPa PRS CONFIGURATION REQUEST may be used.

The LMF may notify the base station before switching of information related to the change of the positioning base station, for example, that the base station is no longer the positioning base station. For the notification, NRPPa signaling, for example, signaling of NRPPa PRS CONFIGURATION REQUEST may be used. The base station before switching may recognize that the base station is no longer the positioning base station using the information. The base station before switching may not transmit and receive the positioning signal in response to the notification. Consequently, for example, the power consumption of the base station can be reduced.

The LMF may not notify the base station before switching of information related to the change of the positioning base station. Consequently, for example, the amount of signaling between the LMF and the base station can be reduced.

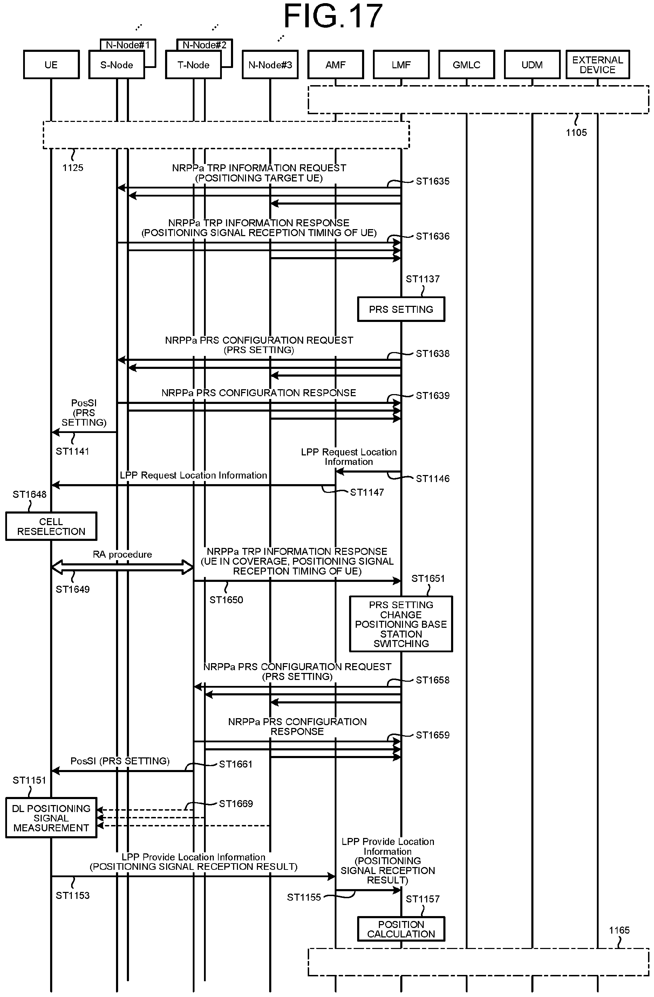

FIG. 17 is a sequence diagram illustrating an example of a positioning procedure involving the cell reselection of the UE. FIG. 17 illustrates an example in which cell reselection is performed after a positioning signal reception request from the LMF to the UE. FIG. 17 illustrates an example in which the serving base station before cell reselection is S-Node, the serving base station after cell reselection is T-Node, the positioning signal source base stations before cell reselection are N-Node #1 and N-Node #3, and the positioning signal source base stations after cell reselection are N-Node #2 and N-Node #3. In the example illustrated in FIG. 17, processes similar to those in FIGS. 11 and 12 are denoted by the same reference signs, and descriptions already provided are omitted.

Procedures 1105 and 1125 illustrated in FIG. 17 are similar to those in FIG. 11.

In steps ST1635 and ST1636 illustrated in FIG. 17, processing similar to that in steps ST1135 and ST1136 in FIG. 11 is performed between the S-Node, N-Node #1 and N-Node #3, and the LMF.

Step ST1137 illustrated in FIG. 17 is similar to that in FIG. 11.

In steps ST1638 and ST1639 illustrated in FIG. 17, processing similar to that in steps ST1138 and ST1139 in FIG. 11 is performed between the S-Node, N-Node #1 and N-Node #3, and the LMF.

Steps ST1141, ST1146, and ST1147 illustrated in FIG. 17 are similar to those in FIGS. 11 and 12.

In step ST1648 illustrated in FIG. 17, cell reselection of the UE is performed. In step ST1649, random access processing is performed between the UE and the T-Node.

In step ST1650 illustrated in FIG. 17, the T-Node notifies the LMF of information indicating that the T-Node covers the UE. For the notification, NRPPa signaling, for example, signaling of NRPPa TRP INFORMATION RESPONSE may be used. The information to be provided by the T-Node to the LMF in step ST1650 may include information related to the positioning signal reception timing of the UE. In step ST1651, the LMF changes the positioning signal setting and switches the positioning base station.

In steps ST1658 and ST1659 illustrated in FIG. 17, processes similar to those in steps ST1138 and ST1139 in FIG. 11 are performed between the T-Node, N-Node #2 and N-Node #3, and the LMF. In step ST1661, the T-Node gives the UE notification or broadcast of the changed positioning signal setting. The notification or broadcast may be included in the system information.

In step ST1669 illustrated in FIG. 17, the T-Node, N-Node #2, and N-Node #3 transmit positioning signals to the UE. Step ST1151 is similar to that in FIG. 12.

Step ST1153 to procedure 1165 illustrated in FIG. 17 are similar to those in FIG. 12.

FIG. 17 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 17, other positioning methods may be used as in FIGS. 11 and 12. Other positioning methods may include a positioning method in which the UE transmits a positioning signal. A similar effect can be obtained in other positioning methods.

In FIG. 17, UE-based positioning may be used, or NW-assisted positioning may be used. In addition, in FIG. 17, positioning associated with MO-LR and/or positioning associated with NI-LR may be used. Consequently, for example, a similar effect can be obtained in these positioning methods.

The presence confirmation may be performed from the base station to the UE. For example, paging may be used for the presence confirmation. The paging may be performed in a case where there is no downlink transmission to the UE. The paging may include information related to the reason, for example, information indicating that the paging is for acquiring information related to the base station that covers the UE, or may include information indicating that the paging is for positioning the UE. The LMF may activate the paging. NRPPa signaling for the paging activation may be provided. As another example, the base station may autonomously activate the paging. Consequently, for example, the complexity associated with the acquisition of information related to the base station that covers the UE can be avoided. The presence confirmation may be performed at the on-duration timing of the DRX of the UE. Consequently, for example, the power consumption of the UE can be reduced.

Only a part of the random access processing between the UE and the base station may be performed. For example, messages up to message 3 may be performed in the four-step random access. As another example, two-step random access may be performed. Consequently, for example, random access processing associated with cell reselection can be promptly executed.

The RRC state of the positioning target UE may be caused to transition to RRC_CONNECTED. For example, the state of the UE may be caused to transition to RRC_CONNECTED in response to the presence confirmation described above. Consequently, for example, the positioning procedure can be promptly executed.

The RRC state of the positioning target UE may be determined by the base station or by the AMF. For example, whether to keep the UE in RRC_IDLE, in RRC_INACTIVE, or cause the UE to transition to RRC_INACTIVE or RRC_CONNECTED may be determined by the base station, or by the AMF. For example, the base station and/or the AMF may make the determination using information related to the battery capacity and/or the remaining battery level of the UE. Consequently, for example, flexibility in the communication system can be improved.

The method disclosed in the second embodiment may be used for cell reselection in the same base station. Consequently, for example, the same effect as above can be obtained.

According to the second embodiment, the LMF can promptly grasp the information related to the base station after the cell reselection of the UE, and as a result, the positioning procedure can be promptly executed.

### Third Embodiment.

Positioning of reduced capability UE (Non Patent Literatures 32 to 36) may be performed. The reduced capability UE may transmit and receive a positioning signal within a narrower band than a normal UE.

However, the LMF configures the positioning signal setting on the premise of the band that is used by a normal UE. This causes a problem that the reduced capability UE cannot transmit and receive positioning signals.

The third embodiment discloses a method for solving this problem.

In order to solve the above problem, in the communication system according to the present embodiment, notification of information related to the reduced capability UE is given from the UE to the LMF.

The information may include information related to whether the UE is a reduced capability UE. As another example related to the information, information related to a timing at which the UE can perform reception, for example, DRX cycle and/or DRX timing may be included, information related to the battery capacity of the UE may be included, or information related to the remaining battery level of the UE may be included. The information related to the remaining battery level may be, for example, information related to the remaining battery level itself or information related to the ratio of the remaining battery level to the battery capacity.

The information may include information related to the transmission/reception band of the positioning signal. The information related to the transmission/reception band may include, for example, information related to whether the positioning signal can be transmitted and received using a band other than the initial BWP, information related to the BWP in which the positioning signal can be transmitted and received, or information related to the resource block in which the positioning signal can be transmitted and received.

The notification of the information from the UE to the LMF may be included in LPP signaling, for example, signaling of the LPP provide capability. The information may be included in the positioning capability.

The LMF may configure the positioning signal setting using the information. The setting may be, for example, a setting for the reduced capability UE.

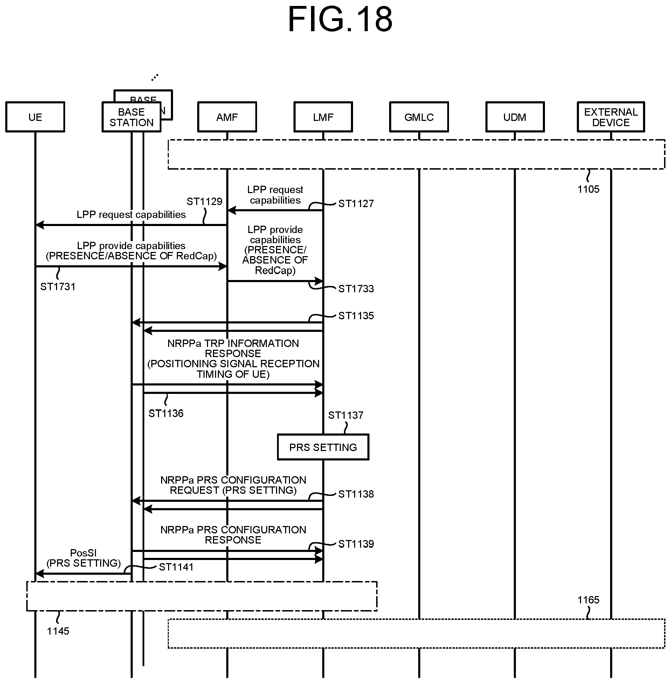

FIG. 18 is a sequence diagram illustrating an example of a positioning procedure in the reduced capability UE. FIG. 18 illustrates an example in which the LMF is notified that the UE is a reduced capability UE by including the UE in the positioning capability. In FIG. 18, processes similar to those in FIGS. 11 and 12 are denoted by the same reference signs, and descriptions already provided are omitted.

Procedure 1105 and steps ST1127 and ST1129 illustrated in FIG. 18 are similar to those in FIG. 11.

In steps ST1731 and ST1733, the UE notifies the LMF of the positioning capability. In the example illustrated in FIG. 18, the notification is given via the AMF. Step ST1731 indicates the notification from the UE to the AMF, and step ST1733 indicates the notification from the AMF to the LMF. Steps ST1731 and ST1733 include information indicating that the UE is the reduced capability UE. In steps ST1731 and ST1733, for example, signaling of LPP provide capabilities is used.

Step ST1135 to procedure 1165 illustrated in FIG. 18 are similar to those in FIGS. 11 and 12.

FIG. 18 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 18, other positioning methods may be used as in FIGS. 11 and 12. Other positioning methods may include a positioning method in which the UE transmits a positioning signal. A similar effect can be obtained in other positioning methods.

In FIG. 18, UE-based positioning may be used, or NW-assisted positioning may be used. In addition, in FIG. 18, positioning associated with MO-LR and/or positioning associated with NI-LR may be used. Consequently, for example, a similar effect can be obtained in these positioning methods.

As another example, notification of the information from the UE to the LMF may be included in signaling of the LPP request assistance data.

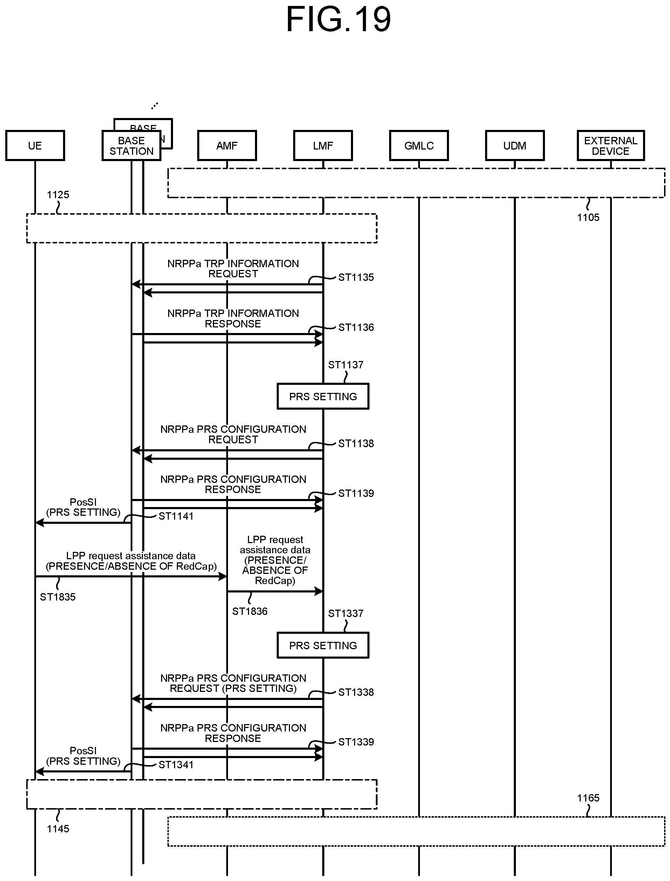

FIG. 19 is a sequence diagram illustrating another example of a positioning procedure in the reduced capability UE. FIG. 19 illustrates an example in which the fact that the UE is a reduced capability UE is included in the signaling of an assistance data request to notify the LMF. In FIG. 19, processes similar to those in FIGS. 11, 12, and 14 are denoted by the same reference signs, and descriptions already provided are omitted.

Procedure 1105 to step ST1141 illustrated in FIG. 19 are similar to those in FIG. 11.

In steps ST1835 and ST1836 illustrated in FIG. 19, the UE notifies the LMF of information indicating that the UE itself is a reduced capability UE. In the example illustrated in FIG. 19, the notification is given via the AMF. Step ST1835 indicates the notification from the UE to the AMF, and step ST1836 indicates the notification from the AMF to the LMF. As the notification of the information, signaling of a request for positioning assistance data, for example, signaling of LPP request assistance data may be used. Steps ST1835 and ST1836 may include information related to the positioning signal reception timing in the UE, for example, the above-described information items (1) to (6). Steps ST1835 and ST1836 may include information indicating on-demand PRS request. In step ST1337, the LMF configures the positioning signal setting. Information included in the signaling in step ST1836 may be used for the setting.

Steps ST1338 to ST1341 illustrated in FIG. 19 are similar to those in FIG. 14.

Procedures 1145 and 1165 illustrated in FIG. 19 are similar to those in FIG. 12.

FIG. 19 illustrates the example in which the positioning signal setting is broadcast to the UE using the system information. However, the UE may be individually notified of the positioning signal setting by the LMF. The notification from the LMF to the UE may be given via the AMF. For the notification from the LMF to the UE, for example, signaling of LPP Provide Assistance Data (Non Patent Literature 31) may be used. Consequently, for example, the UE can receive the setting without waiting for the broadcast timing, and as a result, the UE can promptly acquire the positioning signal setting.

Although the case where DL-TDOA is used is illustrated in FIG. 19, other positioning methods may be used as in FIGS. 11 and 12. Other positioning methods may include a positioning method in which the UE transmits a positioning signal. A similar effect can be obtained in other positioning methods.

In FIG. 19, UE-based positioning may be used, or NW-assisted positioning may be used. In addition, in FIG. 19, positioning associated with MO-LR and/or positioning associated with NI-LR may be used. Consequently, for example, a similar effect can be obtained in these positioning methods.

A positioning method for the reduced capability UE may be predetermined. For example, in the reduced capability UE, positioning using a positioning method with high power consumption may not be performed. The aforementioned operations may be statically determined in a standard, for example. The availability/non-availability of positioning in the reduced capability UE may be determined for each positioning method. For example, positioning using a positioning method including positioning signal transmission may not be performed. A positioning method including positioning signal transmission may be, for example, a positioning method for transmitting an uplink SRS or a positioning method for transmitting a positioning signal (hereinafter may be referred to as a sidelink positioning reference signal: SL-PRS) in a sidelink. Only a positioning method with transmission and reception of positioning signals using only a narrow band may be performed, only a positioning method having a long cycle of transmission and reception of positioning signals may be used, only a positioning method using transmission and reception of positioning signals to and from a communication partner in a short distance may be used, a positioning method having a small amount of processing related to positioning may be used, or a combination of the above may be used.

A positioning method for the reduced capability UE may be determined semi-statically. For example, the positioning method for the reduced capability UE may be determined by using the battery capacity of the UE, by using the remaining battery level, or by using the ratio of the remaining battery level to the battery capacity. For example, in a case where the remaining battery level is lower than or equal to a predetermined threshold, a positioning method with high power consumption may not be used. The threshold may be determined by a standard, by the LMF, or by the AMF.

The UE may notify the LMF of information related to the remaining battery level. For example, the information may be provided as notification by being included in the positioning capability, or by using another LPP signaling. A new LPP signaling may be provided and used. As another example, the UE may provide notification of the information via the base station. In the notification via the base station, for example, RRC signaling, MAC signaling, or L1/L2 signaling may be used. NRPPa signaling may be used for the notification from the base station to the LMF. As another example, the UE may notify the LMF of the information via the AMF. NAS signaling may be used for the communication via the AMF.

Information related to the matter to be prioritized in positioning may be determined. The matter to be prioritized may be, for example, power consumption, positioning accuracy, or positioning latency. The information may be determined by the positioning request source and provided as notification to the LMF, may be determined and used by the LMF, or may be provided as notification to the LMF by the UE. Consequently, for example, flexibility in the communication system can be improved.

Disclosed below are other solutions. The positioning signal may be transmitted and received within a band in which transmission and reception can be performed. The UE may notify the LMF of information related to the band used for transmission and reception. For example, the notification may be included in the notification of the positioning signal reception result, in the notification of the positioning capability, or in both of the foregoing. The information may include information related to the reason. The information related to the reason may be, for example, information indicating that the UE is the reduced capability UE.

The LMF may notify the UE of information related to the band of the positioning signal or the information related to the code sequence. The information related to the band may include information indicating the start location of the band, information indicating the size of the band, information indicating the end location of the band, or a combination of a plurality of these. The information related to the code sequence may include information related to the arrangement of the code sequence. The information related to the arrangement of the code sequence may be, for example, information indicating that the code sequence is reallocated within a band in which the reduced capability UE can perform transmission and reception or information indicating that the reallocation is not performed within the band. The UE may transmit and receive positioning signals by using the information provided. For example, the UE may receive the positioning signal including an intermittent code sequence or transmit the positioning signal including an intermittent code sequence by using the information indicating that the reallocation of the code sequence is not performed.

For example, the notification of the information indicating whether the reallocation of the code sequence is performed makes it possible to avoid the code mismatch of the positioning signal between the UE and the base station, and as a result, it is possible to avoid the reception error of the positioning signal in the UE and/or the base station.

The code sequence of the positioning signal may be reallocated within a band in which the reduced capability UE can perform transmission and reception. Consequently, for example, complexity associated with transmission and reception of positioning signals in the reduced capability UE can be avoided.

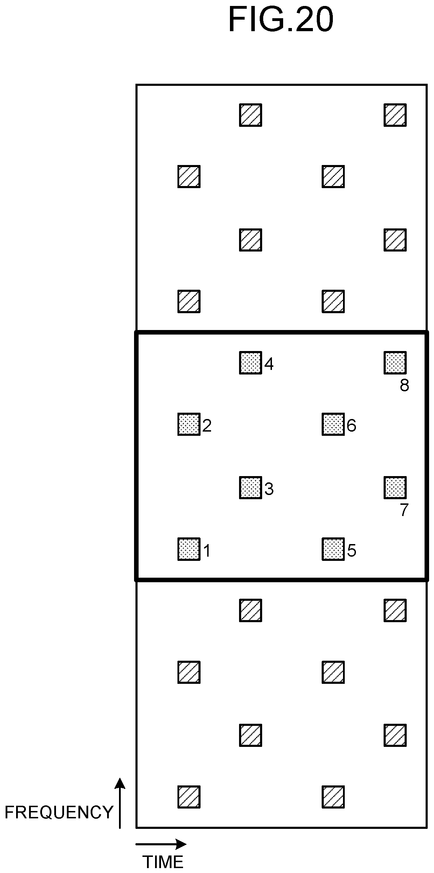

FIG. 20 is a diagram illustrating an example in which the code sequence of the positioning signal is reallocated within a band in which the reduced capability UE can perform transmission and reception. In FIG. 20, the horizontal axis represents the time axis, and the vertical axis represents the frequency axis. A region surrounded by a solid line in FIG. 20 indicates one PRB, and a region shaded or filled with gray indicates a resource element (RE) to which a positioning signal is allocated. The region surrounded by the thick line indicates the frequency and time resources available for transmission and reception by the reduced capability UE. In FIG. 20, numbers assigned near REs to which positioning signals are allocated indicate the order of the code sequence.

In the example illustrated in FIG. 20, numbers of the code sequence are allocated only in the band in which the reduced capability UE can perform transmission and reception. That is, numbers of the encoded sequence are allocated only in the RE filled with gray in FIG. 20.

In the example illustrated in FIG. 20, the frequency domain to which the positioning signal is allocated is 3PRB, among which the frequency domain in which the reduced capability UE can perform transmission and reception is 1PRB, but the allocation of each frequency domain is not limited to the example illustrated in FIG. 20. In addition, the example in which the time domain is one slot has been described, but the allocation of the time domain is not limited to the example illustrated in FIG. 20. In addition, the RE to which the positioning signal is allocated is not limited to the example illustrated in FIG. 20.

The code sequence of the positioning signal may not be reallocated within a band in which the reduced capability UE can perform transmission and reception. That is, the code sequence of the positioning signal may be allocated serially through the bands that are used by other UEs. Consequently, for example, complexity associated with transmission and reception of positioning signals can be avoided in the entire system including other UEs.

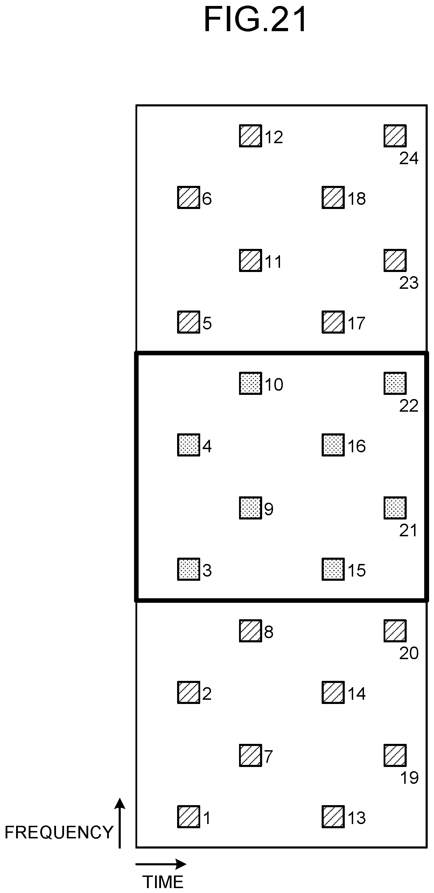

FIG. 21 is a diagram illustrating an example in which the code sequence of the positioning signal is not reallocated within a band in which the reduced capability UE can perform transmission and reception. The horizontal axis, the vertical axis, the lines, the shaded regions, the filled regions, and the numbers in FIG. 21 are similar to those in FIG. 20.

In the example illustrated in FIG. 21, numbers of the code sequence are allocated in the band in which transmission and reception can be performed by other UEs as well. That is, numbers of the encoded sequence are assigned serially through the REs shaded or filled with gray in FIG. 21.

Also in FIG. 21, similarly to FIG. 20, the frequency domain and the time domain to which the positioning signal is allocated, and the allocation pattern of the positioning signal are not limited to the example illustrated in FIG. 21.

Positioning using sidelink may be supported. For example, transmission of SL-PRS may be supported, reception of SL-PRS may be supported, or both transmission and reception of SL-PRS may be supported. Whether to support transmission and/or reception of SL-PRS may be determined for each UE. Whether to support transmission and/or reception of SL-PRS may be determined for each of the reduced capability UEs, determined for each of the UEs that are not reduced capability UEs, or determined for each of the UEs regardless of whether the UE is a reduced capability UE. The information may be included in, for example, the UE capability or the positioning capability of the UE. The LMF may change the positioning method using the information. Consequently, for example, positioning using the sidelink can be smoothly executed in the communication system.

Although the example in which the information disclosed in the third embodiment is included in the positioning capability has been described, the information may be included as a UE category. Consequently, for example, complexity in the communication system can be avoided.

According to the third embodiment, transmission and reception of positioning signals can also be performed for the reduced capability UE, and as a result, positioning of the reduced capability UE can be executed.

### Fourth Embodiment.

The positioning signal setting may include information related to the beam. The information related to the beam may be, for example, information related to QCL. The base station and/or the UE may transmit and receive positioning signals using the information.

However, as the UE moves, there is a possibility that the beam that can be received by the UE changes. In this case, the positioning signal of a different positioning signal setting needs to be used, and the positioning signal setting may be reconfigured between the UE and the LMF, resulting in a problem that the power consumption of the UE increases and the positioning procedure takes time.

The fourth embodiment discloses a method for solving this problem.

In order to solve the above problem, in the communication system according to the present embodiment, the positioning signal setting includes setting related to a plurality of beams.

The plurality of beams may be a plurality of beams in one cell, or may be composed of one or more beams in each of a plurality of cells. The plurality of cells may be a plurality of cells in one base station and/or DU, or may be composed of one or more cells in each of a plurality of base stations and/or DUs.

The LMF may notify the base station of the positioning signal setting including a plurality of settings related to beams. The notification may be given to a plurality of base stations. For example, the notification may be given to the serving base station or a neighboring base station. For the notification, NRPPa signaling, for example, signaling of NRPPa PRS CONFIGURATION REQUEST may be used. For example, by giving the notification to a neighboring base station, transmission and reception of positioning signals in the neighboring base station can be promptly controlled. The base station may give the UE notification or broadcast of the setting. The notification or broadcast may be performed, for example, by transmission of system information.

The LMF may notify the UE of the positioning signal setting including a plurality of settings related to beams. For the notification, LPP signaling, for example, signaling of LPP provide assistance data, may be used.

The base station may transmit a positioning signal by using a plurality of beams related to one positioning signal setting. All of the plurality of beams may be used for the transmission, or only some of the beams may be used.

The UE may perform a reception operation for a plurality of beams related to one positioning signal setting. The reception operation may be performed on all of the plurality of beams, or the reception operation may be performed on only some of the beams.

The UE may notify the LMF of the positioning signal reception result for some or all of the plurality of beams. For the notification, LPP signaling, for example, signaling of LPP provide location information, may be used. The notification may include information related to the beam of the received positioning signal. For example, the LMF may perform a reception operation for a plurality of beams related to one positioning signal setting by using the information. The reception operation may be performed on all of the plurality of beams, or the reception operation may be performed on only some of the beams.

As an example in which the UE performs the reception operation and/or the notification of the positioning signal reception result for only some beams, the UE may perform the reception operation of a predetermined number of beams in descending order of the received power and/or the reception quality, or may perform the reception operation of beams in which the received power and/or the reception quality exceed or are equal to or greater than a predetermined threshold. A combination of the above may be performed, for example, the reception operation of a predetermined number of beams in descending order and exceeding or equal to or greater than a predetermined threshold may be performed.

The base station may transmit a positioning signal by using some of a plurality of beams related to one positioning signal setting. The number of some beams may be one or more.

Disclosed below are other solutions. The base station may switch the beam regardless of the information of the beam included in the positioning signal setting provided from the LMF. The information of the beam included in the positioning signal setting provided from the LMF may be an initial setting value of the beam that is used for transmitting the positioning signal.

The base station may notify the UE of information related to beam switching. For the notification, RRC signaling, MAC signaling, L1/L2 signaling, or a combination of a plurality of the above may be used. The UE may switch the beam of the positioning signal to be received by using the notification. For the beam switching, for example, the same method as the beam control of user data (see Non Patent Literature 14) may be used. For example, by using MAC signaling and/or L1/L2 signaling for the notification, it is possible to promptly switch the beam that is used for the positioning signal.

The base station may notify the LMF of information related to beam switching. For the notification, NRPPa signaling may be used. The LMF may update the positioning signal setting using the information.

The UE may request the base station to switch the beam on which the positioning signal is transmitted. For the request, for example, random access processing may be used. The request using the random access processing may be made by, for example, the UE in the RRC_INACTIVE state or the UE in the RRC_IDLE state. The request may be made by the UE in the RRC_CONNECTED state. The UE may transmit RACH to the base station. The UE may make the request in response to a failure in receiving the positioning signal. For the request, contention-based random access may be used. Consequently, for example, a large number of UEs can be accommodated. As another example, random access without collision may be used. Consequently, for example, prompt notification can be given. The base station may acquire information of the beam requested by the UE using random access processing, for example, information related to the timing of the PRACH.

The base station may request the LMF to change the positioning signal setting, for example, change the beam, or the base station itself may change the beam. The base station may give the UE notification or broadcast of the positioning signal setting change, for example, beam change.

As another solution, the information of the beam may be excluded from the positioning signal setting. The beam control of the positioning signal may be performed by the base station. Consequently, for example, setting complexity in the communication system can be avoided.

According to the fourth embodiment, it is possible to promptly execute the switching of the beam that is used for transmission and reception of the positioning signal, and as a result, the positioning procedure can be promptly executed.

In the present disclosure, a part described as a gNB or a cell may be either a gNB or a cell unless otherwise specified.

The above-described embodiments and modifications thereof are merely examples, and the embodiments and modifications thereof can be freely combined. Any component of the embodiments and modifications thereof can be appropriately changed or omitted.

For example, in the above-described embodiments and modifications thereof, a subframe is an example of a unit of time for communication in the fifth-generation communication systems. A subframe may be a unit of scheduling. In each of the above-described embodiments and modifications thereof, subframe-unit processes may be performed as TTI-unit, slot-unit, subslot-unit, or minislot-unit processes.

For example, the methods disclosed in above-described embodiments and modifications thereof may be applied not only to vehicle-to-everything (V2X) services but also to services using SL communication. For example, the methods may be applied to SL communication that is used in various types of services such as proximity-based services, public safety, communication between wearable terminals, and communication between factory devices.

Although the present disclosure has been described in detail, the above description is illustrative and not restrictive in all aspects. Numerous modifications not illustrated are considered as assumable.

### Reference Signs List

202 communication terminal device (mobile terminal); 210 communication system; 213, 240-1, 240-2, 750 base station device (NR base station, base station); 214 5G core unit; 215 central unit; 216 distributed unit; 217 central unit for control plane; 218 central unit for user plane; 219 TRP; 301, 403 protocol processing unit; 302 application unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 526 control unit; 401 EPC communication unit; 402 other base station communication unit; 412 5GC communication unit; 521 Data Network communication unit; 522 base station communication unit; 523 user plane communication unit; 523-1 PDU processing unit; 523-2 mobility anchoring unit; 525 control plane control unit; 525-1 NAS security unit; 525-2 idle state mobility management unit; 527 session management unit; 527-1 PDU session control unit; 527-2 UE IP address allocating unit; 751-1 to 751-8 beam; 752 cell.

## Claims

1. A communication system to which a fifth-generation wireless access system is applied, the communication system comprising:
a network-side device equipped with a location management function of the fifth-generation wireless access system; and
a base station, wherein
in a case where a positioning request for a communication terminal connected to the base station occurs,
the base station to which a positioning target terminal that is a communication terminal to be subjected to positioning is connected notifies the network-side device of information related to a timing at which the positioning target terminal is able to receive a positioning signal, and
the network-side device determines setting contents related to a transmission/reception timing of a positioning signal based on the information provided from the base station, and notifies the base station that transmits the positioning signal and the positioning target terminal of the setting contents determined.

2. A communication system to which a fifth-generation wireless access system is applied, the communication system comprising:
a network-side device equipped with a location management function of the fifth-generation wireless access system; and
a base station, wherein
in a case where a positioning request for a communication terminal connected to the base station occurs,
a positioning target terminal that is a communication terminal to be subjected to positioning notifies the network-side device of information related to a timing at which the positioning target terminal is able to receive a positioning signal, and
the network-side device determines setting contents related to a transmission/reception timing of a positioning signal based on the information provided from the positioning target terminal, and notifies the base station that transmits the positioning signal and the positioning target terminal of the setting contents determined.

3. The communication system according to claim 1 or 2, wherein
in a case where the location management function does not grasp a base station that covers a communication terminal that is a target of the positioning request at a time that the positioning request occurs,
an access and mobility management function of the fifth-generation wireless access system notifies the location management function of information related to a base station that covers a communication terminal that is a target of the positioning request that has occurred.

4. The communication system according to any one of claims 1 to 3, wherein
in a case where cell reselection by the positioning target terminal occurs,
a base station constituting a reselected cell notifies the network-side device of information indicating that the base station covers the positioning target terminal and information related to a timing at which the positioning target terminal is able to receive a positioning signal, and
the network-side device changes the setting contents based on the information provided from the base station constituting the cell reselected by the positioning target terminal, and notifies the base station that transmits the positioning signal and the positioning target terminal of the setting contents changed.

5. The communication system according to any one of claims 1 to 4, wherein
the network-side device acquires information related to capability possessed by the positioning target terminal, and determines the setting contents based on the information acquired and information related to a timing at which the positioning target terminal is able to receive a positioning signal.

6. The communication system according to any one of claims 1 to 5, wherein
the setting contents include information related to a beam that the positioning target terminal is able to receive.
